# FASCICULE DE BREVET EUROPEEN

(11) **EP 2 160 045 B1**
(45) Date de publication et mention de la délivrance du brevet: **12.10.2011**
(21) Numéro de dépôt: 09167359.0
(22) Date de dépôt: 06.08.2009
(51) Int. Cl.: H04Q 11/00, H04J 14/02

(54) **Noeud de commutation de paquets optiques**
Knoten zur Kommunikation von optischen Paketen
Optical packet communication node

(30) Priorité: 25.08.2008 FR 0855698
(43) Date de publication de la demande: 03.03.2010
(73) Titulaire: Alcatel Lucent, 75007 Paris (FR)
(72) Inventeur: Zami, Thierry, 91620, NOZAY (FR); Chiaroni, Dominique, 91620, NOZAY (FR); Ciavaglia, Laurent, 91620, NOZAY (FR)
(74) Mandataire: Keseris, Denis

(56) Documents cités:
- EP-A- 1 054 572
- WO-A-01/61903
- WO-A-97/18685
- OKAMOTO S ET AL: "Optical path cross-connect systems for photonic transport networks" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 novembre 1993 (1993-11-29), pages 474-480, XP010109628 ISBN: 978-0-7803-0917-3

## Description

L'invention se rapporte aux réseaux de communications optiques à multiplexage spectral de canaux de longueurs d'ondes, appelé en anglais Wavelengtn Division Multiplexing (WDM). L'invention se rapporte à une architecture de noeud capable d'insérer, d'extraire et de transférer des paquets optiques transportés sur des canaux de longueurs d'ondes, en particulier, des paquets optiques multi canaux.

On connaît des noeuds de réseaux WDM capables d'insérer, d'extraire :et de transférer des paquets optiques transportés sur des canaux de longueurs d'ondes reçus sur une entrée. Par exemple WO 01/061903 A1 décrit un noeud inséré entre une fibre d'entrée et une fibre de sortie portant des canaux de longueurs d'ondes. Ce noeud offre des Fonctions d'insertion du trafic, d'extraction du trafic et de transfert du trafic. Ces fonctions sont réalisées sur les trafics transportés par des canaux de longueurs d'ondes. En réalisant la fonction de transfert de manière transparente, c'est a dire sans conversion du signal de données vers le domaine électronique, on réduit le nombre de transpondeurs optiques nécessaires par rapport a un noeud de commutation produisant une conversion électronique de tout le trafic entrant.

D'autres systèmes de l'art anterieur sont divulgués dans EP-A-1054572, publiée le 22 novembre 2000, WO97/18685A, publiée le 22 mai 1997 et « Optical path cross-connect systems for photonic transport networks », OKAMOTO S ET AL, 29 novembre 1993, pages 474-480, XP010109628, ISBN :978-0-7803-0917-3.

Un but de l'invention est de fournir un noeud de commutation de paquets optiques présentant un degré de connectivité plus élevé que dans l'art connu, c'est à dire comportant par exemple plusieurs fibres d'entrées et une ou plusieurs fibres de sortie. Un tel noeud doit être capable par exemple de commuter du trafic dans un réseau maillé ou des réseaux d'anneaux multiples.

Il existe le besoin d'un tel noeud capable de commuter des trafics portés par paquets, et qui garde la capacité de commuter des trafics portés par des circuits optiques.

Du fait du coût des équipements optiques, il existe aussi un besoin d'un tel noeud qui soit réalisable de manière modulaire, pour pouvoir adapter ses capacités de traitement du trafic d'une manière évolutive en fonction des besoins existants dans le réseau. Il importe également que l'architecture optique retenue pour le noeud de paquets optiques utilise le nombre le plus faible possible de filtres optiques en cascade sur les chemins traversés pour l'extraction, l'insertion ou le transfert des paquets optiques, au risque dans le cas contraire de contraindre inutilement la connectivité géographique du noeud. Il existe encore un besoin d'un noeud de commutation de paquets optiques offrant globalement, dans le domaine optique, les mêmes fonctionnalités qu'un routeur électronique. L'invention a notamment pour but de satisfaire un ou plusieurs de ces besoins.

Pour cela, l'invention fournit un noeud de commutation de paquets optiques comportant :
une pluralité d'entrées pour recevoir des signaux optiques comprenant des paquets de données portés par des canaux de longueurs d'ondes,
un séparateur de canaux de longueurs d'ondes respectif disposé sur chacune des entrées et capable de séparer sur des sorties de séparateurs pour paquets des signaux optiques comprenant des paquets de données portés par des canaux de longueurs d'ondes,
au moins une sortie pour transmettre des signaux optiques comprenant des paquets de données portés par des canaux de longueurs d'ondes,
un combineur de canaux de longueurs d'ondes respectif, disposé sur ladite au moins une sortie, ce combineur pouvant laisser passer sur ladite au moins une sortie correspondante des canaux de longueurs d'ondes reçus sur au moins deux entrées du combineur,
ledit au moins un combineur étant associé à au moins deux chemins optiques d'insertion, chacun desdits chemins optiques d'insertion étant connecté à une entrée respective dudit combineur respectif et pouvant transmettre des signaux optiques comprenant des paquets de données portés par des canaux de longueurs d'ondes,
au moins une porte optique respective , disposée sur chacun desdits au moins deux chemins optiques d'insertion , et commutable en mode paquet pour sélectivement bloquer ou faire passer un ou plusieurs paquets de données portés par des canaux de longueurs d'ondes sur lesdits chemins optiques d'insertion,
au moins deux coupleurs d'insertion de paquets optiques, disposés sur lesdits au moins deux chemins optiques d'insertion respectifs, entre ladite porte optique respective et l'entrée respective du combineur associé,
et au moins deux modules d'insertion, chacun relié à un coupleur d'insertion respectif, pour engendrer sur lesdits au moins deux chemins optiques d'insertion respectifs, un ou plusieurs paquets de données optiques, sur des canaux de longueurs d'ondes,
un module d'extraction de paquets optiques apte à démoduler des paquets optiques de données portés par des canaux de longueurs d'ondes,
et un contrôleur contrôlant le module d'extraction de paquets, lesdits au moins deux modules d'insertion, et lesdites au moins deux portes optiques, de manière à extraire, à insérer ou à transférer du trafic à l'échelle de un ou plusieurs paquets sur des canaux de longueurs d'ondes,
caractérisé par le fait qu'il comporte un coupleur en étoile respectif associé à chaque combineur de canaux de longueurs d'ondes respectif,
ledit coupleur en étoile comportant des sorties de coupleur en étoile connectées à chaque chemin optique d'insertion associé au combineur respectif,
une autre sortie de coupleur en étoile connectée au module d'extraction de paquets,
et plusieurs entrées de coupleur en étoile reliées par des chemins optiques d'extraction à des sorties pour paquets de plusieurs desdits séparateurs de canaux de longueur d'onde, chacun desdits séparateurs de canaux étant configuré pour séparer vers la ou chacune desdites sorties pour paquets, un ou plusieurs canaux de longueurs d'onde portant des paquets de données destinés à ladite sortie du noeud sur laquelle est disposé le combineur associé audit coupleur en étoile.

Il est utile qu'au moins un desdits séparateurs de canaux de longueurs d'ondes soit capable de
séparer sur au moins une sortie pour paquets, au moins un canal de longueur d'onde portant des paquets de données,
et sur au moins une autre sortie, dite sortie pour circuits optiques, au moins un canal de longueur d'onde portant un circuit optique,
lesdits paquets de données et ledit circuit optique étant destinés à une même sortie du noeud de commutation,
ledit noeud comportant un chemin optique de transfert de circuit reliant une entrée de circuit optique du combineur de canaux de longueurs d'ondes disposé sur ladite sortie de noeud à ladite sortie de circuit optique dudit au moins un séparateur de canaux de longueurs d'ondes respectif
et que le combineur est capable de laisser passer vers ladite sortie du noeud de commutation des paquets optiques sur un canal de longueur d'onde reçu sur une entrée de paquets depuis un chemin optique d'insertion respectif
et au moins un circuit optique sur un canal de longueur d'onde reçu sur une entrée de circuit optique dudit combineur de canaux de longueurs d'ondes, depuis un chemin optique de transfert de circuit respectif.

Le noeud de commutation de paquets optiques peut utiliser avantageusement une porte optique de type amplificateur optique semi-conducteur

Le noeud de commutation de paquets optiques possède de préférence un module d'insertion capable d'engendrer sur une pluralité de canaux de longueurs d'ondes des paquets optiques multi canaux, un paquet optique multi canaux pouvant être inséré sur le chemin optique d'insertion respectif.

Le noeud de commutation de paquets optiques peut utiliser un séparateur de type démultiplexeur périodique.

Le noeud de commutation de paquets optiques possède selon un mode de réalisation de l'invention au moins un séparateur qui est un démultiplexeur réglable.

Selon un mode de réalisation particulier, le noeud de commutation de paquets optiques est tel que ledit au moins un démultiplexeur réglable peut être configuré pour séparer sur une sortie pour paquets au moins un canal de longueur d'onde quand celui ci transporte des paquets optiques et de séparer ledit au moins canal de longueur d'onde sur une sortie pour circuits, quand ledit au moins un canal de longueur d'onde transporte un circuit optique.

Le noeud de commutation de paquets optiques peut aussi être tel qu'au moins un desdits modules d'insertion comporte au moins deux émetteurs de paquets optiques , chacun étant capable d'insérer des paquets optiques sur un canal de longueur d'onde différent, et qu'au moins un des séparateurs est capable de séparer sur une même sortie de séparateur pour paquets lesdits deux canaux de longueurs d'ondes différents

Le noeud de commutation de paquets optiques peut utiliser un combineur de type multiplexeur périodique.

Le noeud de commutation de paquets optiques peut aussi utiliser un combineur de type multiplexeur réglable.

Avantageusement, le noeud de commutation de paquets optiques est tel qu'au moins un desdits modules d'insertion comporte un émetteur de paquets accordable en longueur d'onde.

De plus, le noeud de commutation selon un mode de réalisation de l'invention peut être avantageusement utilisé lorsque les paquets reçus à ses entrées sont des paquets optiques multi canaux.

Une idée à la base de l'invention est que le noeud de commutation de paquets optiques puisse partager ses ressources d'extraction et de transfert entre les trafics de paquets optiques qu'il est capable de recevoir sur plusieurs entrées.

Le noeud selon un mode de réalisation de l'invention est reconfigurable, c'est à dire permet de modifier l'affectation des ressources de commutation de paquets et de circuit, par exemple quand la nature des protocoles (paquets ou circuits) sur les canaux de longueurs d'ondes reçus sur chacune des entrées évolue dans le temps, ou que varie la priorité relative de ces trafics, ou que varient encore, si le noeud comporte plusieurs sorties, les sorties du noeud sur lesquelles ces trafics doivent sortir. Cette reconfigurabilité du noeud est un avantage pour résoudre le problème général de conception de réseaux optiques flexibles, c'est à dire dont les connections de bout en bout sur chaque canal de longueur d'onde sont aisément reconfigurables, particulièrement quand ces canaux portent des paquets optiques.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique d'un noeud de commutation de paquets optiques, selon le premier et le deuxième mode de réalisation de l'invention, dans un réseau WDM qu'il forme avec d'autres noeuds, ce noeud étant essentiellement capable de réaliser l'insertion, l'extraction et le transfert de paquets optiques sur des canaux de longueurs d'ondes et, accessoirement, l'insertion, l'extraction et le transfert de circuits optiques sur des canaux de longueurs d'ondes.
La figure 2 est une vue schématique du plan optique du noeud de commutation de la figure 1, selon un premier et un deuxième mode de réalisation de l'invention.
La figure 3 est une représentation de certains blocs fonctionnels du noeud de la figure 2 dans laquelle on a numéroté les sorties de séparateurs pour paquets optiques sur des canaux de longueurs d'ondes et les sorties de séparateurs pour circuits optiques sur des canaux de longueurs d'ondes. On a numéroté au même chiffre les entrées de modules de commutation de paquets ou de combineurs respectives.
La figure 4 est une représentation de blocs fonctionnels de la figure 2 qui participent à l'extraction, l'insertion et le transfert de paquets optiques sur des canaux de longueurs d'ondes, selon un premier mode de réalisation de l'invention.
La figure 5 est une représentation schématique d'un exemple de distribution possible de paquets optiques multi canaux et de circuits optiques sur des canaux de longueurs d'ondes, ces paquets pouvant être reçus sur au moins deux entrées du noeud de la figure 1.
La figure 6 est une vue schématique du plan électrique de contrôle de certains blocs fonctionnels des figures 2 et 4.
La figure 7 est une représentation de certains blocs fonctionnels de la figure 2 qui participent à l'extraction, l'insertion et le transfert de paquets optiques sur des canaux de longueurs d'ondes, selon un deuxième mode de réalisation de l'invention.

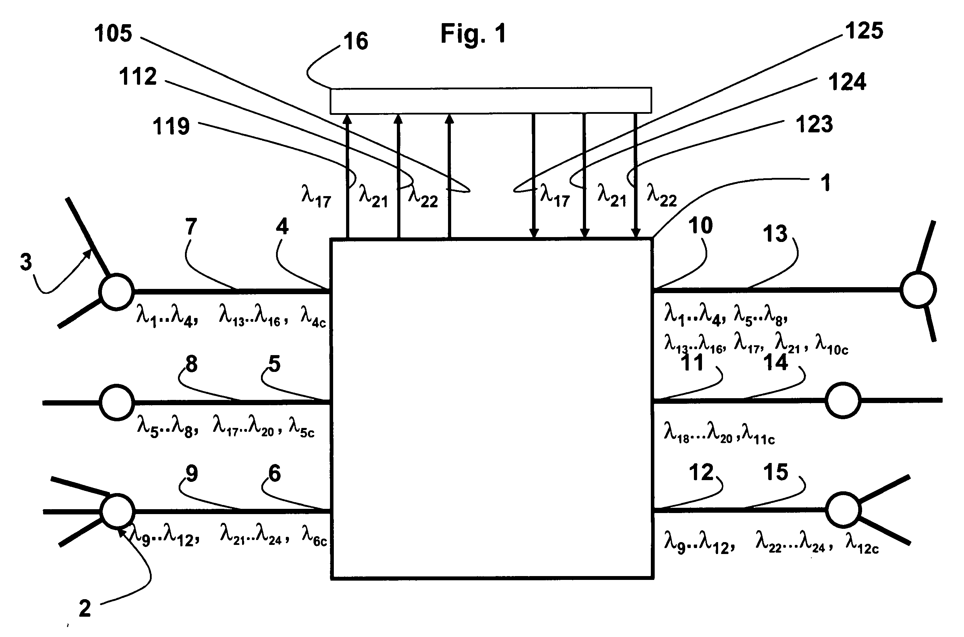

Sur la figure 1, on a représenté schématiquement un réseau optique avec une architecture maillée, par exemple du type réseau dorsal national. Sur la figure 1, le noeud de commutation 1 fait parti d'un réseau comportant d'autres noeuds 2, les noeuds 2 étant reliés entre eux par des liaisons optiques 3, par exemple des fibres optiques. Les liaisons 3 transportent des circuits optiques ou des paquets optiques ou les deux, sur des canaux de longueurs d'ondes. Le noeud 1 est relié à trois noeuds 2 en amont dans le réseau par des liaisons optiques 7, 8,9, par exemple des fibres optiques, couplées respectivement à ses entrées 4, 5,6. Le noeud 1 est relié à trois noeuds 2 en aval dans le réseau par des liaisons optiques 13, 14, 15, par exemple des fibres optiques, couplées respectivement aux sorties 10, 11,12 du noeud 1.

La figure 1 présente un état à un instant donné, où les liaisons 7, 8 et 9 transportent des circuits optiques sur des canaux de longueurs d'ondes, sur 12 canaux de longueurs d'ondes λ₁₃ à λ₂₄. Les données sur chacun de ces canaux sont portées par exemple selon les standards de protocoles SONET ou SDH ou tout autres protocoles de circuits optiques. Les protocoles de circuits optiques transportés par les canaux λ₁₃ à λ₂₄ ne sont pas nécessairement identiques. A l'instant représenté sur la figure 1, l'entrée 4 reçoit les canaux λ₁₃ à λ₁₆, l'entrée 5 reçoit les canaux λ₁₇ à λ₂₀ et l'entrée 6 reçoit les canaux λ₂₁ à λ₂₄.

La figure 1 présente également, au même instant, 12 canaux de longueurs d'ondes λ₁ à λ₁₂, portant des paquets optiques sur des canaux de longueurs d'ondes. L'entrée 4 reçoit les canaux λ₁ à λ₄, l'entrée 5 reçoit les canaux λ₅ à λ₈ et l'entrée 6 reçoit les canaux λ₉ à λ₁₂.

Sur la figure 1, les canaux de longueurs d'ondes λ₁ à λ₂₄ appartiennent à une grille prédéterminée de 24 canaux de longueurs d'ondes. Le nombre entier positif de ces canaux pourrait être différent, par exemple égal à 40 ou 80 canaux. Le débit de données par canal de longueur d'onde est fixé par la cadence des modulateurs optiques des noeuds du réseau optique, par exemple 10 ou 40 Gbit/s. Les canaux ne portent pas nécessairement des signaux aux mêmes débits. Dans les deux modes de réalisation présentés, les canaux de longueurs d'ondes λ₁ à λ₂₄ sont tous différents. Le noeud de réseau n'a donc pas à régler de problème de contention entre canaux de longueurs d'ondes, ce problème étant supposé réglé par ailleurs dans le réseau.

On suppose que des longueurs d'ondes additionnelles de signalisation λ_{4c} , λ_{5c} , λ_{6c} sont reçues sur chacune des entrées 4,5 et 6 respectivement et que des longueurs d'ondes de signalisation λ_{10c} , λ_{11c}, λ_{12c} sont réémises sur chacune des sorties 10, 11 et 12. Les canaux de longueurs d'ondes λ_{4c} , λ_{5c} , λ_{6c} , λ_{10c} , λ_{11c} , λ_{12c} transportent des informations de signalisation relatives aux paquets optiques et aux circuits optiques. Ces six canaux sont supposés être tous différents des canaux λ₁ à λ₂₄, assurant donc une signalisation « hors bande » du trafic porté par les canaux λ₁ à λ₂₄. Un mode de réalisation de l'invention aurait toutefois pu aussi être présenté, en utilisant une signalisation « in band » pour un ou plusieurs trafics. Par exemple, la longueur d'oncle λ₁ aurait pu transporter « in band » les informations de signalisation des paquets optiques qu'elle transporte sur la liaison optique 7, à l'instant représenté sur la figure 1. On supposera par la suite à titre illustratif que les canaux de signalisation λ_{4c} , λ_{5c} , λ_{6c} , λ_{10c} , λ_{11c} , λ_{12c} sont à chaque instant distincts de chacun des canaux λ₁ à λ₂₄.

La figure 1 représente également de façon schématique un terminal émetteur-récepteur de circuits optiques 16 relié au noeud de commutation 1 par des liaisons optiques 105, 112, 119, 123, 124 et 125, par exemple des fibres optiques. Les liaisons 105, 112, 119 portent des circuits optiques sur les canaux λ₁₇, λ₂₁ et λ₂₂, ces circuits correspondant à du trafic extrait depuis le noeud 1 vers le terminal 16. Les liaisons 123,124 et 125 portent des circuits sur les mêmes canaux λ₁₇, λ₂₁ et λ₂₂, ces circuits correspondant à du trafic inséré depuis le terminal 16 vers le noeud 1. Sur la figure 1, le canal λ₁₇ est extrait du noeud 1 par la liaison 119. Les données qu'il transporte sont démodulées au niveau du terminal 16. Dans un plan électronique non représenté du terminal 16, un échange d'informations codées sur des bits, et correspondant à une extraction et/ou une insertion de trafic, est réalisé. Un transmetteur permet de moduler des bits insérés sur un ou des canaux de longueurs d'onde. Le canal λ₁₇ est réinséré dans le noeud 1 par la fibre 125, puis transmis à la sortie 10. Le fonctionnement est analogue pour les canaux λ₂₁ et λ₂₂, au niveau du terminal émetteur-récepteur 16. Par contre, sur la figure 1, le circuit sur le canal λ₂₄ est seulement transféré de l'entrée 6 vers la sortie 12, sans échange de trafic au niveau du terminal 16. A l'instant représenté sur la figure 1, tous les canaux λ₁₃ à λ₂₄ sont donc directement transférés à un des sorties du noeud 1 , à l'exception des canaux λ₁₇, λ₂₁ et λ₂₂.

Le noeud 1 dans les deux modes de réalisation présentés a donc la capacité accessoire, en collaborant avec le terminal 6, de réaliser de l'insertion, de l'extraction et du transfert de circuits optiques sur des canaux de longueurs d'ondes. Comme il sera expliqué plus en détail avec les figures suivantes, le noeud 1 dans les deux modes de réalisation présentés possède à titre principal la capacité de réaliser l'insertion, l'extraction et le transfert de paquets optiques portés par des canaux de longueurs d'ondes.

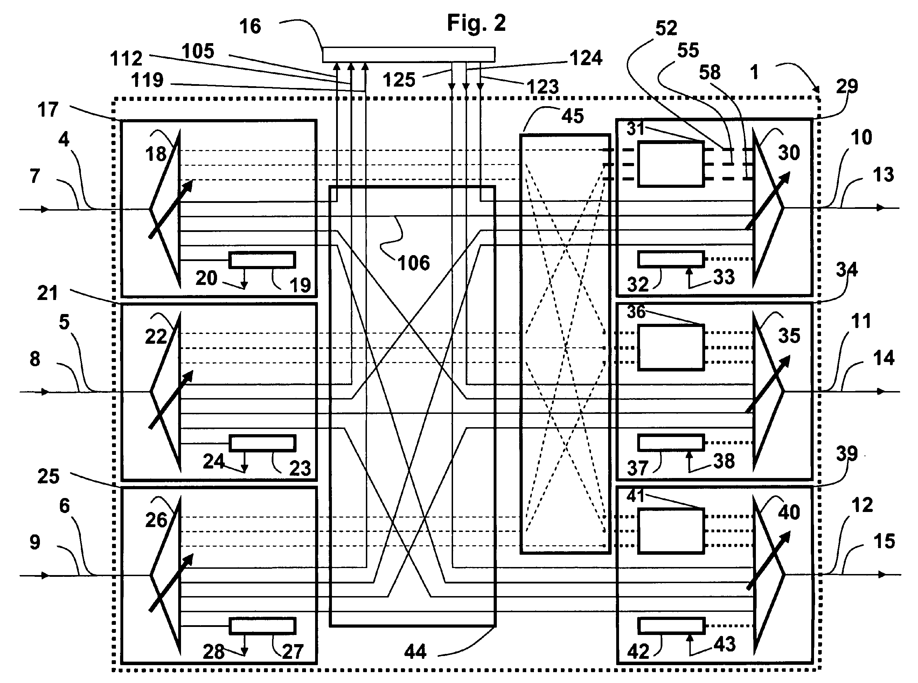

Par exemple, à l'instant représenté sur la figure 1, les canaux λ₁ à λ₄ reçus à l'entrées 4 du noeud 1 et qui portent des paquets optiques sont orientés vers la sortie 10, via le module 31 (figure 2) associé à la sortie 10. Le module 31 est capable de réaliser l'insertion, l'extraction ou le transfert de paquets optiques sur chacun des canaux λ₁ à λ₄. Au même instant, les canaux λ₅ à λ₈ reçus sur l'entrée 5 et qui portent des paquets optiques sont également orientés vers la sortie 10, via le module 31. Le module 31 est capable d'insertion, d'extraction et de transfert de paquets optiques sur les canaux λ₅ à λ₈.

La distribution des canaux de longueurs d'ondes représentée sur la figure 1 aux sorties 10, 11 et 12, correspond à une illustration à un moment donné, en fonction des informations de signalisation reçues par le noeud 1 sur les canaux λ_{4c}, λ_{5c} et λ_{6c}. Cette distribution peut évoluer au cours du temps.

Le réseau WDM de la figure 1 est de préférence conçu de manière que tout noeud puisse communiquer avec tous autre noeud dans le domaine optique. A cette fin, le noeud 1 selon le premier et le deuxième mode de réalisation peut transporter de manière transparente des paquets de données sur des canaux de longueurs d'ondes depuis ses entrées vers ses sorties .

Bien d'autres éléments que ceux représentés sur la figure 1 peuvent intervenir dans la constitution du réseau WDM, par exemple des couches clientes pour les noeuds 2 ou 1, des liens 3 redondants pour la protection contre les pannes, d'autres liens pour l'insertion de plusieurs noeuds 1, un système de gestion de réseau, etc.

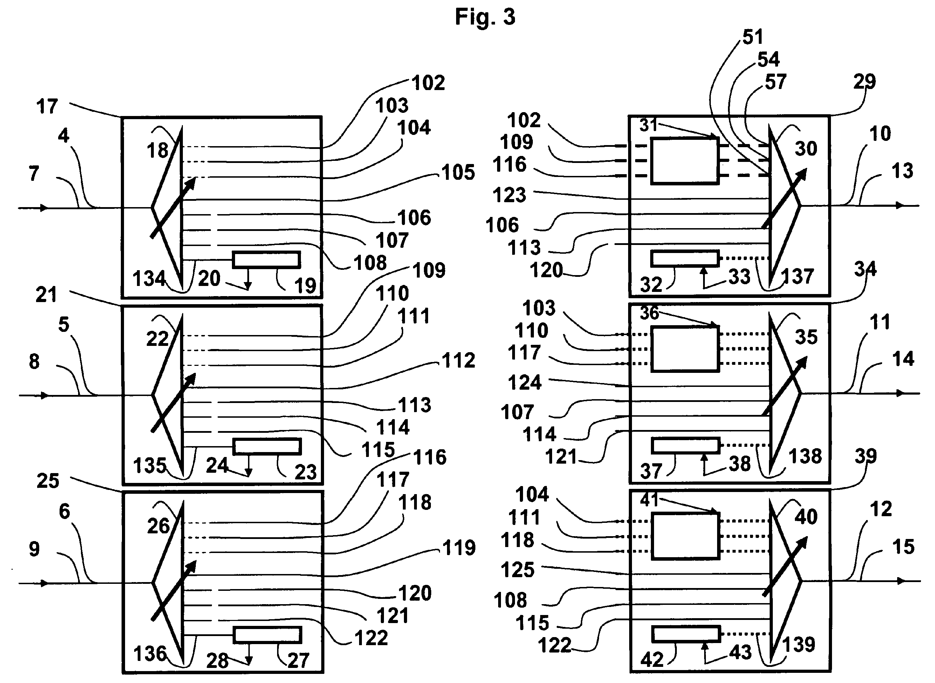

La figure 2 représente schématiquement le plan optique du noeud 1, y compris ses connections au terminal 16. Chacune des entrées 4, 5 et 6 est reliée à l'entrée d'un séparateur respectif 18, 22, 26, ces séparateurs étant capables de séparer sur leurs sorties respectives des canaux de longueurs d'ondes. Chacune des sorties 10, 11 et 12 est reliée à la sortie d'un combineur respectif 30, 35 et 40, ces combineurs étant capables de laisser passer des canaux de longueurs d'ondes, depuis leurs entrées respectives vers leurs sorties respectives. Des détecteurs de signalisation 19, 23 et 27 associés aux séparateurs respectifs 18, 22 et 26 sont capables de démoduler des données reçues sur les canaux de signalisation λ_{4c}, λ_{5c} , λ_{6c} (figure 1) respectivement reçus sur les entrées 4, 5 et 6. Des émetteurs de signalisation 32, 37 et 42 associés sont capables de moduler des données sur les canaux de signalisation λ_{10c}, λ_{11c}, λ_{12c} que les combineurs respectifs 30, 35 et 40 laissent passer vers les sorties respectives 10, 11 et 12. Comme indiqué sur la figure 3, les détecteurs de signalisation 19, 23 et 27 sont couplés à une sortie respective d'un séparateur respectif 18,22 et 26 par une liaison optique respective 134,135 et 136, par exemple une fibre optique. Comme représenté également sur la figure 3, chaque émetteur de signalisation 32, 37 et 42 est couplé à une entrée d'un combineur respectif 30, 35 et 40, par une liaison optique respective 137,138 et 139, par exemple une fibre optique.

Sur la figure 2, les combineurs 30, 35 et 40 sont reliés à des modules de commutation de paquets respectifs 31, 36 et 41 qui sont capables d'extraire, d'insérer et de transférer des paquets optiques portés par des canaux optiques. Par exemple, le combineur 30 est relié au module 31 respectif par les chemins optiques d'insertion respectifs 52, 55 et 58. Des chemins optiques d'insertion analogues permettent de relier les combineurs 35 et 40 aux modules 36 et 41 respectifs.

Sur la figure 2 , les modules 31, 36 et 41 sont reliés à chacun des séparateurs 18,22 et 26 par des chemins d'extraction de paquets, par exemple des fibres optiques.

Sur la figure 3, on a numéroté les sorties des séparateurs 18, 22 et 26 et les entrées respectives des modules de commutation de paquets 31, 36, 41 ou des combineurs 30, 35 et 40. Ces entrées et ces sorties portent les mêmes chiffres quand elles sont reliées par un chemin optique. Ainsi, sur la figure 3, la sortie 102 du séparateur 18 est reliée par un chemin optique non représenté, par exemple une fibre optique, à l'entrée 102 du module de commutation de paquet 31. Dans la suite du texte nous prendrons pour convention d'appeler au même chiffre le chemin optique (non représenté sur la figure 3) reliant une sortie de séparateur et une entrée de module de commutation de paquet ou de combineur, au même chiffre. Par exemple, le chemin 102 sera celui qui relie la sortie 102 du séparateur 18 à l'entrée 102 du module de commutation 31. Un de ces chemins, le chemin 106, a été indiqué sur la figure 2. Comme on le verra plus loin, ce chemin 106 relie directement la sortie 106 du séparateur 18 à l'entrée 106 du combineur 30, pour réaliser le transfert de canaux portant des circuits optiques.

Sur la figure 3, les sorties de séparateurs vers des chemins d'extraction de paquets au même chiffre, sont numérotés 102,103 et 104 pour le séparateur 18, 109, 110 et 111 pour le séparateur 22 et 116, 117 et 118 pour le séparateur 26. Chacun des séparateurs 18, 22 et 26 possède trois sorties de paquets reliées respectivement aux trois modules 31,36 et 41. Par exemple les chemins optiques 102,103 et 104 relient trois sorties du séparateur 18 respectivement à une entrée du module 31, une entrée du module 36 et une entrée du module 41. De même pour les séparateurs 22 et 26.

D'autres chemins optiques peuvent être empruntés par les circuits optiques. Les chemins d'extraction de circuits 105, 112 et 119 sont reliés à trois sorties d'extraction de circuits, aux mêmes chiffres, appartenant respectivement aux séparateurs 18,22 et 26. Ces chemins 105, 1 12 et 119 se terminent au terminal 16 comme vu précédemment (figure 2). Les chemins d'insertion de circuits 123, 124 et 125 sont reliés à trois entrées d'insertion de circuits, aux mêmes chiffres de référence, appartenant aux trois combineurs respectifs 30, 35 et 40. Ces chemins 123, 124 et 125 se terminent également au terminal 16.

Le noeud 1 (figure 2) comporte également neuf chemins optiques, par exemple des fibres optiques, reliant directement des sorties de séparateurs à des entrées des combineurs pour transférer des circuits optiques. Les sorties de séparateur et les entrées de combineurs associées à ces chemins sont numérotés au même chiffre sur la figure 3. Les trois sorties de transfert de circuits 106, 107 et 108 du séparateur 18 sont reliées aux trois entrées de transfert de circuits 106, 107 et 108 appartenant respectivement aux combineurs 30,35 et 40. Les trois sorties de transfert de circuits 113, 114 et 115 du séparateur 22 sont reliées aux trois entrées de transfert de circuits 113, 114 et 115 appartenant respectivement aux combineurs 30,35 et 40. Les trois sorties de transfert de circuits 120, 121 et 122 du séparateur 26 sont reliées aux trois entrées de transfert de circuits 120, 121 et 122 appartenant respectivement aux combineurs 30,35 et 40.

Le tableau suivant résume la correspondance entre le chiffre de la sortie de séparateur, le type de transport possible, la capacité de commutation applicable au trafic porté par les canaux issus de cette sortie de séparateur, le chiffre du module de commutation de paquet éventuellement traversé et les chiffres de sorties du noeud.

| Sortie de séparateur | Type de transport | Capacité de commutation | Module traversé (1) | Sortie de noeud |
|---|---|---|---|---|
| 102 | paquet | extraction, insertion ou transfert | 31 | 10 |
| 103 | paquet | extraction, insertion ou transfert | 36 | 11 |
| 104 | paquet | extraction, insertion ou transfert | 41 | 12 |
| 105 | circuit | extraction | aucun | Vers le terminal 16 (2) |
| 106 | circuit | transfert | aucun | 10 |
| 107 | circuit | transfert | aucun | 11 |
| 108 | circuit | transfert | aucun | 12 |
| 109 | paquet | extraction, insertion ou transfert | 31 | 10 |
| 110 | paquet | extraction, insertion ou transfert | 36 | 11 |
| 111 | paquet | extraction, insertion ou transfert | 41 | 12 |
| 112 | circuit | extraction | aucun | Vers terminal 16 (2) |
| 113 | circuit | transfert | aucun | 10 |
| 114 | circuit | transfert | aucun | 11 |
| 115 | circuit | transfert | aucun | 12 |
| 116 | paquet | extraction, insertion ou transfert | 31 | 10 |
| 117 | paquet | extraction, insertion ou transfert | 36 | 11 |
| 118 | paquet | extraction, insertion ou transfert | 41 | 12 |
| 119 | circuit | extraction | aucun | Vers le terminal 16 (2) |
| 120 | circuit | transfert | aucun | 10 |
| 121 | circuit | transfert | aucun | 11 |
| 122 | circuit | transfert | aucun | 12 |
| 123 | circuit | insertion | aucun | Depuis terminal 16 (2) |
| 124 | circuit | insertion | aucun | Depuis terminal 16 (2) |
| 125 | circuit | insertion | aucun | Depuis terminal 16 (2) |

| | | | | |
|---|---|---|---|---|
| (1) Module d'insertion, d'extraction et transfert de paquets optiques (2) Module émetteur-récepteur de circuits optiques | | | | |

Dans le premier mode de réalisation de l'invention , les correspondances définies par le tableau précédents sont stables au cours du temps, même si les canaux de longueurs d'ondes reçus aux entrées 4,5 et 6 ou sortant aux sorties 10,11 et 12 évoluent au cours du temps, ainsi que le type de trafic porté par ces canaux (circuits ou paquets) .

Sur la figure 2, un séparateur et un récepteur de signalisation associés sont à chaque fois réunis sur une carte optique respective 17, 21 et 25. Un combineur, un module de commutation de paquets associé et un émetteur de signalisation associé sont à chaque fois réunis sur une carte optique respective 29, 34 et 39. Les chemins optiques de circuits 105, 106, 107, 108, 112, 113, 114, 115, 119, 120, 121, 122, 123, 124 et 125 peuvent être des fibres optiques libres mais leur croisement peut être avantageusement ordonné en intégrant partiellement ces fibres dans une feuille flexible organique 44. De même, les chemins optiques de paquets 102, 103, 104, 109, 110, 111, 116, 117 et 118 peuvent être des fibres libres mais leur croisement peut être avantageusement ordonné en intégrant partiellement ces fibres dans une feuille flexible organique 45.

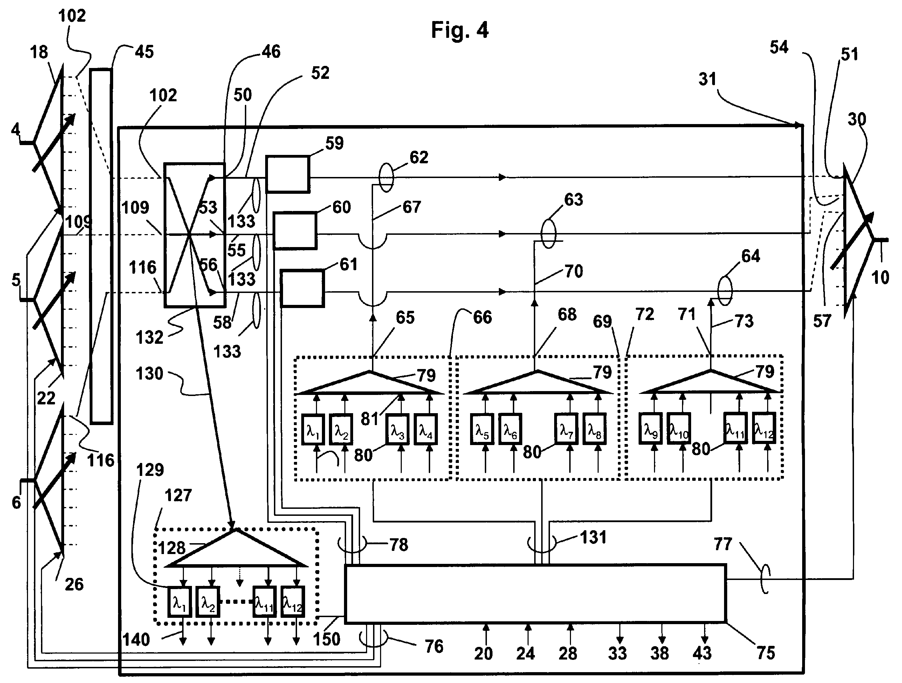

La figure 4 représente schématiquement une vue détaillée du module de commutation de paquets 31 de la figure 2 . Les modules 36 et 41 (figure 2) sont dans le premier mode de réalisation présenté, identiques au module 31.

Le module 31 inclut un coupleur en étoile 46 respectif, de type 3 : 4.

Les trois entrées 102, 109, 116 du coupleur 46 sont couplées par des chemins optiques d'extraction aux mêmes chiffres, à des sorties de séparateurs aux mêmes chiffres (figure 4). Ses trois sorties 50, 53, 56 sont couplées en tête de trois chemins optiques d'insertion 52, 55 et 58 respectifs, par exemple des fibres optiques. Les extrémités respectives de ces chemins de transfert sont couplées à trois entrées 51, 54 et 57 du combineur 30 respectif (figures 3 et 4).

Chacun des trois chemins 52, 55 et 58 comporte une porte optique respective 59, 60 et 61 et un coupleur d'insertion respectif 62, 63 et 64. Les portes optiques sont par exemple des amplificateurs semi-conducteurs. Les coupleurs d'insertion sont des coupleurs 2 :1, par exemple de type à fibres optiques. D'autres types de portes optiques ou de coupleurs d'insertion sont possibles.

Une des entrées et la sortie de chaque coupleur 62, 63 et 64 se trouvent sur les chemins d'insertion respectifs 52, 55 et 58. Les coupleurs d'insertion 62, 63 et 64 se trouvent sur les chemins optiques d'insertion respectifs, entre les portes optiques 59, 60 et 61 respectives et les entrées de combineurs respectives 51, 54 et 57.

Chaque chemin optique d'insertion 52,55 et 58 peut comporter une ligne à retard optique 133 entre les sorties du coupleur étoile 50, 53 et 56 respectives et les portes optiques 59, 60 et 61 respectives. Les lignes à retard 133 respectives, quand elles sont présentes, par exemple des longueurs de fibres optiques, permettent d'ajuster le temps de transit des paquets à travers le noeud 1 de la figure 1.

L'autre sortie 132 du coupleur en étoile 46 est reliée par un autre chemin optique d'extraction de paquets 130, par exemple une fibre optique, à l'entrée du module d'extraction de paquets optiques 127. L'entrée 127 est couplée à l'entrée du démultiplexeur 128 capable de séparer les douze canaux λ₁ à λ₁₂ sur chacune de ses douze sorties, obtenant ainsi un canal différent sur chacune de ses sorties. Ces douze canaux peuvent être reçus par douze récepteurs de paquets optiques 129, capables de démoduler des paquets optiques portés par les canaux de longueurs d'onde λ₁ à λ₁₂ . Un récepteur de paquets optiques 129 (aussi connu sous le nom anglo-saxon « burst mode receiver ») est capable de démoduler les données des paquets optiques successifs en s'adaptant au niveau de signal de chaque paquet, qui peut varier en fonction de l'origine du paquet optique et de la distance qu'il a parcourue dans le réseau. Les récepteurs de paquets 129 effectuent aussi la récupération d'horloge.

Sur la figure 4, chacun parmi les trois modules d'insertion 66, 69 et 72 est capable, au moyen de quatre émetteurs de paquets optiques 80, d'émettre sur quatre canaux. Le module 66 est capable d'émettre sur les canaux λ₁ à λ_{4.} Le module 69 est capable d'émettre sur les canaux λ₅ à λ₈. Le module 72 est capable d'émettre sur les canaux λ₉ à λ₁₂. Dans le mode de réalisation présenté, les douze canaux de longueurs d'ondes λ₁ à λ₁₂ accessibles grâce aux trois modules d'insertion 66, 69 et 72 sont donc identiques aux douze canaux de longueurs d'ondes que peuvent démoduler les récepteurs de paquets optiques 129. Chacun des modules d'insertion 66, 69 et 72 comporte un combineur de canaux respectif 79, pour laisser passer depuis les entrées respectives 81 de ces combineurs vers des liaisons optiques respectives 67, 70 et 73, par exemple des fibres optiques, les canaux de longueurs d'ondes émis par les groupes de quatre émetteurs de paquets optiques 80 respectifs. La fibre 67 est capable de guider les canaux λ₁ à λ₄ depuis la sortie 65 du module d'insertion 66 jusqu'à la deuxième entrée du coupleur 62. La fibre 70 est capable de guider les canaux λ₅ à λ₈ depuis la sortie 68 du module d'insertion 69 jusqu'à la deuxième entrée du coupleur 63. La fibre 73 est capable de guider les canaux λ₉ à λ₁₂ depuis la sortie 71 du module d'insertion 72 jusqu'à la deuxième entrée du coupleur 64. Le combineur 79 peut être par exemple du type réseau sélectif planaire (Arrayed Waveguide Grating ou AWG) en silice sur silicium ou un multiplexeur utilisant des fibres portant des réseaux de diffraction photo réfractifs (Fibre Bragg Gratings ou FBGs) ou encore un multiplexeur en optique de volume, c'est à dire n'utilisant pas le guidage optique, d'autres types de technologies étant possibles. Chaque combineur 79 peut aussi être un coupleur optique 4 :1 (agnostique aux canaux de longueurs d'ondes) à base de fibres optiques ou en technologie planaire silice sur silicium ou en optique de volume, d'autres types de technologies de coupleurs étant possibles. Le combineur 79 peut aussi être réalisé en matériau semi-conducteur GaInAsP/InP , par exemple si les canaux λ₁ à λ₁₂ se situent autour de 1,55µm. Dans ce cas, le combineur 79 ainsi que les émetteurs de paquets optiques 80 peuvent aussi être intégrés monolithiquement en technologies GaInAsP/InP sur un même substrat InP.

Sur la figure 4, les séparateurs 18, 22 et 26 sont des démultiplexeurs réglables, chacun possédant une entrée et huit sorties. Chacun de ces trois séparateurs est capable de séparer sur chacune de sept parmi ses huit sorties, et sous le contrôle du contrôleur 75 par les liaisons 76, toute combinaison des canaux λ₁ à λ₂₄. Chacun des séparateurs 18, 22 et 26 est aussi capable de séparer sur sa huitième sortie respective les canaux de signalisation respectifs λ_{4c}, λ_{5c}, λ_{6c} (figure 1). Les séparateurs 18,22 et 26 sont donc des démultiplexeurs accordables. Les séparateurs 18, 22, 26 sont avantageusement des démultiplexeurs accordables de type WSS (Wavelength Selective Switch), avec une entrée et huit sorties.

Dans un mode de réalisation, un tel WSS présente des pertes d'insertion relativement faibles, comprises entre 3dB et 6dB. Ce WSS présente par exemple une architecture à plusieurs étages, un étage séparant chacun des 27 canaux λ₁ à λ₂₄ et λ_{4c}, λ_{5c}, λ_{6c} sur 27 sorties de l'étage , un autre étage , fait de miroirs orientables, déflectant chacun des 27 canaux ainsi séparés , par le moyen de MEM's optiques (Micro Electrical Machines), sélectivement sur l'une quelconque des huit sorties du WSS et sous le contrôle du contrôleur 75. Chaque sortie du WSS reçoit donc un, plusieurs , ou aucun des canaux entrants, selon l'orientation des miroirs.

Dans le mode de réalisation présenté, le contrôleur 75 affecte comme on l'a vu une des sorties de chaque séparateur 18,22 et 26 à la réception d'un canal de signalisation respectif parmi les canaux λ_{4c}, λ_{5c}, λ_{6c}. Cette sortie est couplée au moyen des liaisons respectives 134, 135 et 136 (figure 3) aux récepteurs de signalisation respectifs 19, 23 et 27.

Comme on l'a également vu, les sept autres sorties respectives de chaque séparateur 18, 22 et 26, c'est à dire respectivement, les sorties 102 à 108, 109 à 115 et 116 à 122 (figure 3), peuvent séparer, selon le réglage du séparateur, sous le contrôle du contrôleur 75 et des liaisons 76, diverses combinaisons des 24 canaux λ₁ à λ₂₄. Le contrôleur 75 est capable de recevoir par les liaisons 20, 24 et 28 (figures 3, 4 et 6) des informations de signalisation qui peuvent être reçues aux entrées 4, 5 et 6 et démodulées par les récepteurs de signalisations respectifs 19, 23 et 27. En fonction des informations de signalisation qu'il reçoit, le contrôleur 75 est capable de régler les séparateurs réglables 18, 22 et 26 pour orienter vers les sorties 102 à 122, des canaux de longueurs d'ondes parmi les λ₁ à λ₂₄ en accord avec les informations de signalisation reçues.

Le contrôleur 75 est capable de recevoir des informations de signalisation lui indiquant si le type de protocole transporté par chacun des canaux de longueurs d'ondes aux entrées 4, 5 et 6 est de type paquets optiques ou circuits optiques. En particulier et comme indiqué dans le tableau précédent, les canaux portant des circuits optiques sont orientés vers les sorties de séparateurs 105, 106, 107, 108, 112, 113, 114, 115, 119, 120, 121, 122 (figure 3). Comme indiqué également dans le tableau précédent, les canaux portant des paquets optiques sont orientés vers les sorties 102, 103, 104, 109, 110, 111, 116, 117, 118. Sur la figure 4, les entrées 102, 109 et 116 du coupleur étoile 46 reçoivent donc, sous le contrôle du contrôleur 75, des paquets optiques sur des canaux de longueurs d'ondes.

Le contrôleur 75 est aussi capable , à l'usage des noeuds en aval dans le réseau de délivrer par les liaisons 33, 38 et 43 (figures 3,4 et 6) des informations de signalisation qui peuvent être modulées par les émetteurs de signalisation 32, 37 et 42 et laissés passer par les chemins 137, 138 et 139 respectifs et les combineurs 30, 35 et 40 respectifs vers les sorties 10, 11 et 12 respectives.

Le contrôleur 75 est encore capable de recevoir des informations de signalisation lui indiquant qu' un groupe de canaux de longueurs d'ondes reçus sur un des séparateurs 18, 22 ou 26, doit ou doivent être commutés, à un instant donné de façon identique, c'est à dire être séparés sur une même sortie dudit même séparateur.

Par exemple, l'entrée 4 peut recevoir des circuits sur les canaux de longueurs d'ondes λ₁₃ à λ₁₆ devant être transmis à la sortie 10 (instant représenté sur la figure 1). Le contrôleur 75 règlera alors pour cela le séparateur 18 (figure 3) pour que ces quatre canaux soient séparés à cet instant sur la sortie 106.

Le contrôleur 75 peut aussi commander la commutation d'un groupe de paquets optiques. A cet effet, le contrôleur 75 peut en effet recevoir des informations de signalisation lui indiquant par exemple de régler un des séparateurs 18, 22 et 26 de façon à séparer sur une même de ses sorties, un groupe de plusieurs canaux portant des paquets optiques. Par exemple, à l'instant représenté sur la figure 1, le séparateur 22 sépare sur sa sortie de paquet 109 les quatre canaux de longueurs d'ondes λ₅ à λ₈ reçus sur l'entrée 5 et qui portent des paquets optiques. Dans l'exemple de réalisation présenté, le temps de réglage des séparateurs est de quelques millisecondes ; les paquets optiques qui peuvent être reçus par le noeud de commutation de paquets optiques peuvent avoir des durées de quelques micro secondes. Le réglage des séparateurs 18, 22 et 26 par le contrôleur 75 est donc réalisé en avance de l'arrivée des paquets optiques et stable sur une longue durée, par rapport à la durée moyenne de ces paquets optiques. C'est ce réglage en avance des séparateurs 18,22 et 26 qui permet aussi, comme indiqué plus haut, la gestion préventive de la contention des canaux de longueurs d'ondes par le système de contrôle du réseau.

Selon ce choix du contrôleur 75, et comme il va être détaillé plus loin, les canaux λ₅ à λ₈ pouvant être reçus à l'entrée 5 ont accès à la sortie 10 via le module 31 et le combineur 30 (figure 2). Ces quatre canaux peuvent ainsi accéder, par n'importe lequel des chemins d'insertion 52, 55 et 58 à une entrées respective 51, 54 et 57 du combineur 30. Dans le mode de réalisation préféré, le combineur 30 est un multiplexeur accordable de type WSS. Le contrôleur 75 a réglé par avance, grâce à la liaison 77, le combineur 30 de manière à ce qu'il laisse passer depuis son entrée 54 et vers la sortie 10 les quatre canaux λ₅ à λ₈ qui accèdent à cette entrée par le chemin d'insertion 55. Les quatre canaux λ₅ à λ₈ atteignent donc la sortie 10 via le chemin optique d'insertion 55 et l'entrée 54, et ceci aux seuls instants où la porte optique 60 est ouverte, sous le contrôle du contrôleur 75 grâce à une liaison 78. A l'inverse, le contrôleur 75 a réglé le combineur 30 pour qu'il ne laisse pas passer depuis ses entrées 51 et 57 les quatre canaux λ₅ à λ₈ qui accèdent à ces entrées respectivement par les chemins optiques d'insertion 52 et 58, aux instants ou les portes 59 et 61 sont ouvertes sous la commande du contrôleur 75 et les autres liaisons 78.

Le noeud de commutation selon le premier mode de réalisation de l'invention est donc avantageusement capable de commuter collectivement des groupes de paquets optiques portés simultanément par plusieurs canaux de longueurs d'ondes, reçus sur une de ses entrées. Les groupes de paquets portés par plusieurs canaux de longueurs d'ondes seront appelés ici paquets optiques multi canaux. Par exemple, si on considère le cas d'une trame Ethernet fournie par un port de commutateur Ethernet à un noeud 2 du réseau de la figure 1, le gestionnaire du réseau peut décider de transporter ce paquet Ethernet dans le réseau sous la forme fragmentée de 4 fragments portés par quatre canaux de longueurs d'ondes , ces 4 fragments devant être réassemblées une fois atteint un autre noeud 2 destinataire dans le réseau.

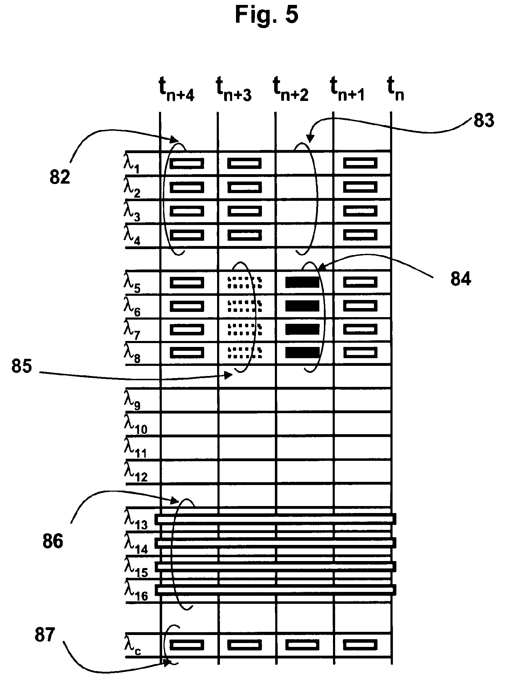

La figure 5 représente schématiquement des paquets optiques multi canaux que le noeud 1 selon un premier mode de réalisation de l'invention est capable de recevoir sur une quelconque de ses entrées et de commuter. Ces paquets optiques multi canaux peuvent être portés soit par les canaux λ₁ à λ₄, soit par les canaux λ₅ à λ₈, soit par les canaux λ₉ à λ₁₂.

Dans l'exemple schématiquement représenté sur la figure 5, les paquets commutés simultanément appartiennent d'une part à un même groupe de 4 canaux, parmi les groupes λ₁ à λ₄ ou λ₅ à λ₈ ou λ₉ à λ₁₂. Ils sont d'autre part situés dans un même intervalle de temps parmi des intervalles définis par des temps successifs tₙ₊₄, tₙ₊₃, tₙ₊₂, tₙ₊₁, tₙ. Les temps tₙ₊₄, tₙ₊₃, tₙ₊₂, tₙ₊₁, tₙ peuvent être cadencés au rythme d'une horloge : on parlera ici d'un protocole synchrone où les paquets arrivent à l'intérieur d'intervalles de temps égaux et successifs. Sur la figure 5, on a représenté sur les canaux individuels λ₁ à λ₈ des fragments de tailles fixes arrivant de façon synchrone. D'autres modes de réalisation sont possibles, bien que moins préférés, par exemple avec des paquets de tailles variables ou asynchrones (c'est à dire dont l'arrivée est aléatoire dans le temps) ou une combinaison de paquets de tailles variables avec une arrivée asynchrone. De nombreux autres protocoles de paquets optiques multi canaux sont possibles.

Dans la suite et pour plus de clarté, il sera supposé le cas de paquets optiques multi canaux dont la taille des fragments respectifs sur chacun des canaux individuels qui les portent est fixe et dont l'arrivée est synchrone à l'intérieur d'intervalles de temps tₙ₊₄, tₙ₊₃, tₙ₊₂, tₙ₊₁, tₙ identiques et successifs.

Sur la figure 5 sont représentés des paquets et des circuits optiques qui peuvent être reçus à une entrée du noeud de commutation selon un premier mode de réalisation de l'invention.

Au chiffre 82 est représenté un paquet optique multi canaux. Ce paquet optique multi canaux est porté sous la forme de quatre fragments sur chacun des quatre canaux λ₁ à λ₄ et dans l'intervalle de temps défini par les temps successifs tₙ₊₄ et tₙ₊₃. Les quatre fragments sont représentés par des rectangle blancs, cette représentation signifiant ici qu'ils peuvent être transférés de l'entrée du noeud considérée à un des sorties du noeud.

Au chiffre 83 est représenté un intervalle de temps vide entre les temps tₙ₊₁ et tₙ₊₂, sur les quatre canaux λ₁ à λ₄, signifiant ainsi l'absence de paquet multi canaux dans cet intervalle de temps.

Au chiffre 84 est représenté un paquet optique multi canaux porté par les quatre canaux λ₅ à λ₈ dans l'intervalle de temps défini par les temps successifs tₙ₊₂ et tₙ₊₁. Ce paquet optique multi canaux est dessiné en noir, cette représentation signifiant ici qu'il peut être extrait dans le noeud.

Au chiffre 85 est représenté un paquet dans l'intervalle de temps entre les temps tₙ₊₂ et tₙ₊₃ sur les quatre canaux λ₅ à λ₈. Ce paquet est dessiné en pointillé, cette représentation signifiant ici qu'un paquet multi canaux peut être inséré dans cet intervalle de temps, et sur ces quatre longueurs d'ondes, lors de la traversée du noeud de commutation de paquets optiques.

Au chiffre 86, on a représenté de façon schématique des circuits optiques que peut recevoir le noeud sur la même entrée. Ces circuits sont portés par les canaux de longueurs d'ondes λ₁₃ à λ₁₆. Ces circuits sont établis pour une durée qui est très longue par comparaison à celle des paquets optiques, par exemple plusieurs mois. Ceci est schématisé par leur représentation 86 qui indique l'absence de discontinuité des données portées par les circuits aux instants tₙ₊₄, tₙ₊₃, tₙ₊₂, tₙ₊₁, tₙ définis pour les paquets. Au chiffre 87, on a représenté de façon schématique des paquets optiques portant des informations de signalisation sur un canal λ_{c}, dans les intervalles de temps définis par les temps successifs tₙ₊₄, tₙ₊₃, tₙ₊₂, tₙ₊₁, tₙ. Selon que l'entrée correspondant au signal de la figure 5 est l'entrée 4 ou 5 ou 6, λ_{c} prend les valeurs λ_{4c}, λ_{5c} ou λ_{6c}, respectivement. Ces informations sont celles reçues par les détecteurs de signalisation 19, 23 ou 27 (figure 2) et transmise par les liaisons 20, 24 et 28 au contrôleur 75 (figure 4).

Pour la commutation d'un paquet optiques multi canaux, la fonction extraction (ou « drop ») avantageusement permise par le noeud 1 selon le premier mode de réalisation de l'invention, consiste par exemple, dans l'intervalle de temps définis par les temps successifs tₙ₊₁ et tₙ₊₂ de la figure 5, à extraire simultanément quatre fragments synchrones sur les quatre canaux λ₅ à λ₈ au chiffre 84. De même, la fonction insertion (ou « add ») consiste par exemple à insérer simultanément quatre fragments synchrones au chiffre 85 sur les quatre canaux λ₅ à λ₈ dans l'intervalle de temps défini par les temps successifs tₙ₊₂ et tₙ₊₃. Enfin, la fonction transfert (ou « continue ») consiste par exemple à transférer simultanément les quatre fragments synchrones sur les canaux λ₁ à λ₄ au chiffre 82 d' une entrée du noeud à une de ses sorties, via un des modules 31, 36 ou 41 (figure 2).

La commutation de paquets multi canaux devrait être de plus en plus utilisée dans les réseaux optiques car elle permet de bénéficier de la capacité de l'optique à commuter simultanément un nombre important de canaux de longueurs d'ondes. Dans l'exemple cité, commuter simultanément 4 canaux de longueurs d'ondes, chacun portant un fragment de paquet client, revient à multiplier par 4 la capacité de commutation d'un commutateur mono canal.

Le premier mode de réalisation de l'invention permet avantageusement, selon la méthode qui va être maintenant détaillé, de commuter des paquets optiques multi canaux, comme précédemment illustré avec la figure 5.

On ne détaillera par contre pas ici les moyens de commutation des circuits optiques sur des longueurs d'ondes. La commutation de circuits est essentiellement sous le contrôle du contrôleur 75 (figure 4) qui est capable de contrôler les séparateurs 18, 22 et 26 et les combineurs 30, 35 et 40 (figure 2) en fonction d'informations de signalisation de manière à ce que tout circuit sur un canal de longueur d'onde puisse être extrait ou inséré au niveau du terminal émetteur-récepteur de circuits optiques 16 ou directement transféré sur une des sorties 10,11,12.

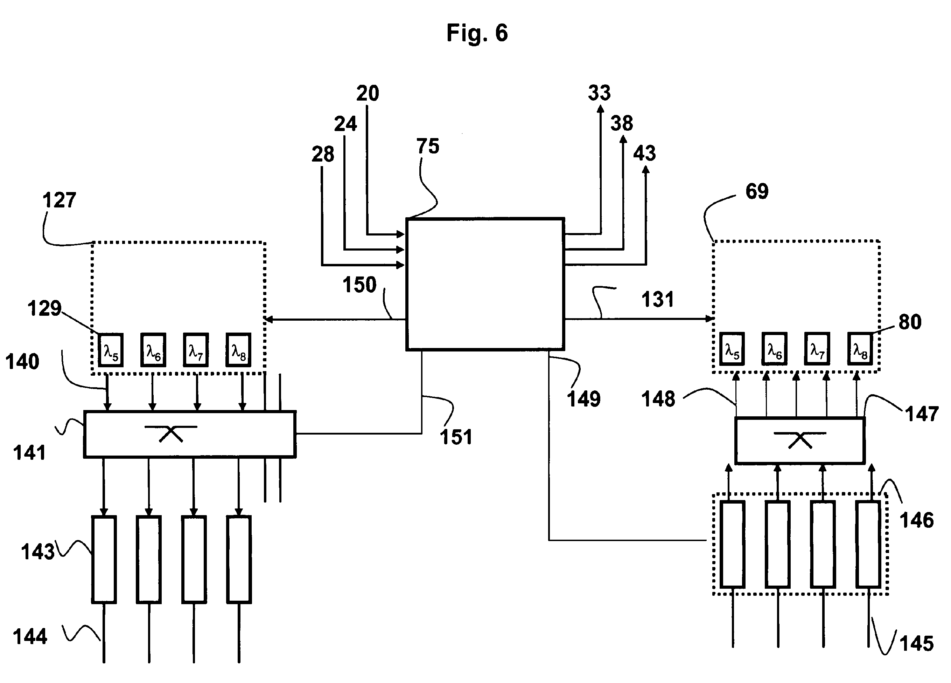

En référence à la figure 6, on décrit maintenant la couche électronique du noeud de commutation de paquets optiques qui permet le transfert (fonction continue), l'extraction (fonction drop) et l'insertion (fonction add) de paquets optiques multi canaux.

Pour expliquer le fonctionnement schématisé sur la figure 6, nous considérerons des paquets optiques multi canaux qui peuvent être reçus sur l'entrée 5 et sur les canaux λ₅ à λ₈ et être commutés vers la sortie 10. Cette commutation doit permettre à des paquets multi canaux reçus sur l'entrée 5 d'être transférés vers la sortie 10 ou extraits vers le module 127 (figure 4), ou encore à des paquets multi canaux émis sur ces mêmes canaux λ₅ à λ₈ par le module d'insertion 69, d'accéder à la sortie 10.

De manière à permettre la commutation de paquets optiques multi canaux reçus sur l'entrée 5 et portés par les canaux λ₅ à λ₈, le contrôleur 75 configure d'abord le séparateur 22 de manière à ce qu'il sépare sur sa sortie 109 les quatre canaux λ₅ à λ₈. Suite à ce réglage, les paquets multi canaux sur les canaux λ₅ à λ₈ accèdent par le chemin 109 à l'entrée 109 du coupleur étoile 46, et depuis les sorties 50, 53 et 56 de celui ci, aux chemins optiques d'insertion 52, 55 et 58.

Le contrôleur 75 configure ensuite par la liaison 77 le combineur 30 pour qu'il laisse passer les canaux λ₅ à λ₈ depuis son entrée 54 vers sa sortie 10 et ne laisse pas passer ces mêmes canaux depuis les entrées 51 ou 57 vers sa sortie 10. Les réglages du séparateur 18 et du combineur 30 sont réalisés par exemple en quelques millisecondes et peuvent rester stables pendant toute la durée de la commutation d'un grand nombre de paquets optiques multi canaux qui se succèdent à des instants successifs tₙ₊₄, tₙ₊₃, tₙ₊₂, tₙ₊₁, tₙ qui sont eux espacés de quelques microsecondes.

Le contrôleur 75 est capable de recevoir par les liaisons 20,24 et 28 (figure 4) des informations de signalisation relatives à des paquets optiques multi canaux sur les canaux λ₅ à λ₈ reçus sur l'entrée 5, et destinés à la sortie 10. Ces informations de signalisation sont reçues par le contrôleur 75 avec une avance temporelle sur ces paquets, pour avoir le temps de traiter ces informations et de configurer les portes optiques 59, 60 et 61 , le module d'extraction 127 et le module d'insertion 69, en synchronisation avec l'arrivée de chaque paquet optique multi canaux : ceci permet de choisir de manière non exclusive parmi les trois fonctions transfert, extraction et insertion de paquets multi canaux, pour chaque intervalle de temps définis par les temps successifs tₙ₊₄, tₙ₊₃, tₙ₊₂, tₙ₊₁, tₙ (figure 5). L'information de signalisation relative à chaque paquet multi canaux inclut par exemple l'identité des canaux de longueurs d'ondes qui le portent, l'identité du ou des noeuds d'accès et de destination dans le réseau, le niveau de priorité du paquet et une information de synchronisation relative à l'instant d'arrivée du paquet dans le noeud.

Extraction de paquets multi canaux : lorsque la destination d'un paquet optique multi canaux sur les canaux λ₅ à λ₈ inclut le noeud de commutation de paquets optiques en question, le contrôleur de noeud 75 commande par la liaison 150 les quatre récepteurs de paquets optiques 129 du module 127 (figures 4 et 6) attribués aux canaux de longueurs d'ondes λ₅ à λ₈ pour démoduler ce paquet multi canaux, c'est-à-dire convertir les données dans le domaine électronique au moyen des quatre détecteurs 129 respectifs et faire passer ces signaux démodulés au commutateur électronique d'extraction 141 par les liens 140 (figure 6). Ainsi, il est possible de ne démoduler que les paquets optiques multi canaux destinés au noeud de commutation de paquets optiques en question, ce qui préserve la confidentialité du trafic en transit. Une alternative consiste à démoduler tous les paquets multi canaux entrants dans le module d'extraction de paquets optiques et à effacer les données qui n'ont pas cette destination.

Le commutateur électronique d'extraction 141 (figure 6) assure un stockage temporaire des données extraites pour gérer la contention vers les ports de sortie 143, réordonner les paquets, et transfère les paquets vers les interfaces de sortie 144.

Une interface de sortie 144 est un module électronique qui formate les données de manière adaptée à la couche cliente connectée au port de sortie 143. Par exemple, les interfaces de sortie 144 sont des cartes de ligne au format Ethernet, par exemple avec une capacité de 10 Gbit/s ou autre. La capacité d'extraction du noeud peut être modifiée de manière modulaire par ajout ou suppression de quatre interfaces de sorties 144 et/ou par ajout ou suppression de quatre récepteurs de paquets optiques 129. Selon un mode de réalisation particulier, quatre récepteurs de paquets optiques 129 et quatre interfaces de sorties 144 de capacité adaptées sont agencés sous la forme d'un module unitaire, par exemple une carte optoélectronique.

Lorsqu'un paquet optique multi canaux sur les canaux λ₅ à λ₈ n'a pas d'autre destination en aval du noeud d'accès, le contrôleur de noeud 75 commande (figure 4) la fermeture de la porte optique 60 correspondant à l'entrée 54 du combineur 30 qui laisse passer ces quatre canaux depuis cette entrée, de manière à effacer ce paquet multi canaux. Ainsi, une fenêtre temporelle est libérée sur ces quatre canaux de longueurs d'ondes pour le trafic de paquets optiques multi canaux à insérer.

Transfert de paquets multi canaux : Inversement, le trafic multipoint ou diffusé à tous les noeuds est normalement passé de manière transparente à travers la porte 60 quand elle est ouverte par le contrôleur 75, via une liaison 78 (figures 4 et 6). La porte 60 peut être aussi utilisée dans ce cas pour amplifier le signal du paquet multi canaux. Dans ce cas, le contrôleur 75 commande par la liaison 151 le commutateur électronique d'extraction 141 pour qu'il ne transmette pas aux ports de sortie 143 les signaux correspondants, démodulés par les récepteurs de paquets 129.

Insertion de paquets multi canaux : La couche électronique (figure 6) comporte une unité de stockage temporaire 146 pour les données à insérer. L'unité 146 reçoit les données à insérer depuis la couche cliente par l'intermédiaire d'interfaces d'entrée 145, classe les données dans des files d'attente en fonction de leurs destinations et de leurs niveaux de priorité pour former des paquets ayant une taille adaptée au format utilisé dans le réseau optique de la figure 1, et transfère ces données aux quatre émetteurs de paquets optiques 80 sur les canaux λ₅ à λ₈, via le commutateur électronique d'insertion 147, lorsque leur insertion est décidée par le programmateur 75.

Sous le contrôle du programmateur 75, et par la liaison 131, chaque émetteur de paquets optiques 80 du module d'insertion 69 utilise les données reçues du commutateur électronique d'insertion 147 par des liaisons 148, pour moduler des paquets optiques transportés sur chacun des quatre canaux de longueurs d'ondes λ₅ à λ₈.

Le programmateur 75 possède une liaison 149 avec l'unité de stockage temporaire 146 pour connaître en permanence les propriétés du trafic à insérer, à savoir par exemple l'état de remplissage des différentes files d'attentes. Lorsqu'il existe un paquet multi canaux en attente d'insertion, le contrôleur de noeud 75 commande son insertion dans une fenêtre temporelle disponible sur les canaux λ₅ à λ₈.

Extraction et insertion conjointes : Le programmateur 75 est aussi en charge de gérer la contention entre les paquets en transit et les paquets insérés. Dans l'exemple présenté où quatre paquets synchrones sur les quatre canaux de longueurs d'ondes λ₅ à λ₈ accèdent au chemin optique 55, la contention est gérée pour l'ensemble du groupe des quatre canaux et dans chaque intervalle de temps tₙ₊₄, tₙ₊₃, tₙ₊₂, tₙ₊₁, tₙ..

Par exemple, plusieurs méthodes peuvent être mise en oeuvre.

Si un paquet optique multi canaux sur les quatre canaux λ₅ à λ₈ en transit présente un niveau de priorité plus élevé qu'un paquet optique multi canaux en attente d'insertion convoitant les mêmes canaux de longueurs d'ondes, le contrôleur 75 laisse passer les quatre paquets en transit et diffère l'insertion du paquet à insérer.

Si le paquet optique multi canaux en transit présente un niveau de priorité moindre qu'un paquet en attente d'insertion convoitant les mêmes canaux de longueurs d'ondes, le contrôleur de noeud bloque le paquet optique multi canaux en transit sur les canaux λ₅ à λ₈ en fermant la porte optique 60 et insère, en commandant le module 69, le paquet optique multi canaux à insérer sur les canaux λ₅ à λ₈ dans la fenêtre temporelle ainsi libérée. Pour les paquets de faible priorité qu'il a effacée, le contrôleur de noeud 75 peut laisser agir les mécanismes de retransmission au niveau du noeud émetteur sans effectuer d'action particulière.

Si un paquet optique multi canaux en transit et un paquet optique multi canaux en attente d'insertion convoitant au même instant le groupe de canaux λ₅ à λ₈ présentent tous les deux un niveau de priorité élevé, correspondant par exemple à une latence garantie incompatible avec une retransmission de bout en bout, le contrôleur 75 commande l'exécution des étapes suivantes : démodulation des paquets optiques multi canaux sur les quatre canaux λ₅ à λ₈ en transit dans la section d'extraction et, simultanément, effacement par la porte 60 des paquets multi canaux sur les quatre canaux λ₅ à λ₈ en transit dans le chemin optique d'insertion 55, insertion par le module 69 et le coupleur 63 d'un paquet optique multi canaux sur les quatre canaux λ₅ à λ₈ à insérer dans la fenêtre temporelle ainsi libérée, stockage des données en transit démodulées dans une unité de stockage temporaire 146, puis insertion de ces données dans un paquet optique multi canaux dans une fenêtre temporelle ultérieure sur des canaux de longueurs d'ondes compatibles avec leur destination, parmi les canaux λ₁ à λ₄ ou λ₅ à λ₈ ou λ₉ à λ₁₂ et accessibles par les modules d'insertion respectifs 66, 69 et 73. Ce traitement présente l'inconvénient de faire passer des données en transit par le domaine électronique, mais un tel événement devrait être assez rare si le réseau n'est pas surchargé et que sa charge est bien répartie sur les canaux de longueurs d'ondes. Ce traitement permet aussi d'effectuer une conversion des quatre canaux de longueurs d'ondes pour le paquet en transit. Ce traitement consistant à donner priorité au paquet à insérer et à différer la transmission du paquet en transit peut aussi être utilisé, indépendamment des niveaux de priorité, lorsque les files d'attente de l'unité de stockage 146 atteignent un niveau de remplissage élevé.

Un avantage du premier mode de réalisation selon l'invention est que le noeud 1 de la figure 1 peut allouer les ressources que constituent les modules d'extraction-insertion-transfert de paquets optiques 31, 36 et 41 à n'importe lequel des trafics de paquets multi canaux reçus aux entrées 4, 5 et 6.

Le noeud est aussi capable d'allouer 4 canaux initialement destinées au transport de paquets optiques au transport de circuits optiques et réciproquement. Par exemple, les quatre canaux λ₉ à λ₁₂ portant des paquets optiques multi canaux reçus sur l'entrée 6 à l'instant représenté sur la figure 1 peuvent être réalloués temporairement à des circuits. Pour cela, le contrôleur 75 peut commander au séparateur 26 de séparer ces quatre canaux vers une sorties pour circuits comme indiquées dans le tableau précédent. Ces canaux ne pourront donc plus atteindre aucun des modules 31, 36 et 41 pour la commutation de paquets optiques multi canaux.

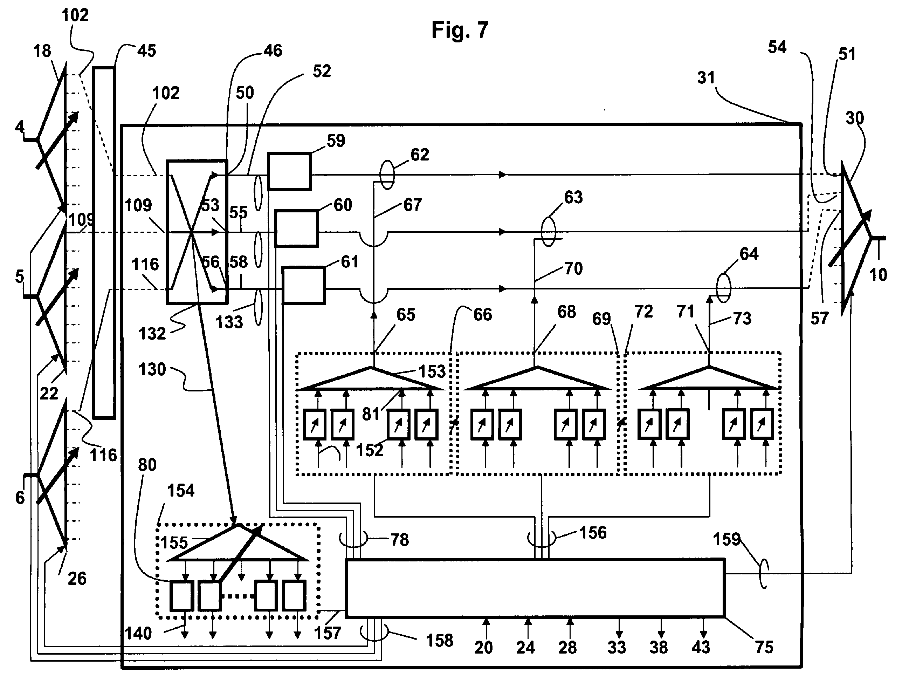

Un deuxième mode de réalisation de l'invention est maintenant décrit. Sauf mention contraire, ce deuxième mode de réalisation est identique au premier mode de réalisation précédemment décrit. La figure 7 est une représentation schématique selon le deuxième mode de réalisation de l'invention ; les éléments au même chiffre de référence que ceux de la figure 4 sont identiques.

Avantageusement, les émetteurs de paquets optiques 80 qui émettent sur un canal de longueur d'onde dans le premier mode de réalisation de l'invention (figure 4) peuvent être remplacés dans un deuxième mode de réalisation de l'invention, par des émetteurs de paquets optiques 152 accordables sur plusieurs canaux de longueurs d'ondes (figure 7).

Dans ce cas, le combineur 153 (figure 7) peut être un coupleur n :1 (agnostique en longueur d'onde) ou un multiplexeur accordable. Ce combineur peut aussi être un dispositif partiellement agnostique en longueur d'onde comme un multiplexeur périodique, ou tout autre dispositif adapté.

Dans le cas où des émetteurs accordables 152 sont utilisés, il est également avantageux d'utiliser des modules de réception de paquets optiques 154 également accordables (figure 7), de manière à ce que l'ensemble des fonctions d'extraction, d'insertion et de transfert de paquet optiques multi canaux soient réalisables sur les canaux accessibles au émetteurs accordables 152. On peut utiliser pour cela un démultiplexeur 155 agnostique en longueur d'onde comme un démultiplexeur accordable de type WSS. On peut aussi utiliser au chiffre 155 un dispositif non accordable mais partiellement agnostique en longueur d'onde, comme un démultiplexeur périodique, ou tout autre dispositif adapté.

Dans ce deuxième mode de réalisation, le contrôleur 75 est capable par la liaison 156 (figure 7), de commander l'accord des transmetteurs accordables 152. La liaison 156 permet également tous les types de réglages précédemment décrits pour la liaison 131 (figure 4). Le contrôleur 75 est aussi capable de commander l'accord du démultiplexeur 155 par la liaison 157, si il s'agit d'un démultiplexeur accordable, par exemple de type WSS.

Les séparateurs 18, 22 et 26 et le combineur 30 peuvent être réglés par le contrôleur 75 sur tous les canaux accessibles aux émetteurs accordables 152, respectivement par les liaisons 158 et 159.

Il existe de nombreuses variantes de mise en oeuvre des deux modes de réalisation présenté. Ces variantes peuvent, par exemple, concerner la connectivité du noeud, son implémentation physique, la nature des grilles de longueurs d'ondes ou des paquets optiques qu'il est capable de recevoir. Certaines de ces variantes sont par la suite évoquées, à partir du premier mode de réalisation de l'invention représenté sur les figures 2 et 4, et sans que les exemples donnés ne soient limitatifs.

La connectivité du noeud, peut ainsi être adapté, en rajoutant ou en retirant des entrées par rapport à la configuration avec les 3 entrées, 4, 5,6, et/ou en rajoutant ou en retirant des sorties par rapport à la configuration avec les 3 sorties 10, 11 et 12 (figure 2). Le nombre d'entrées du noeud selon l'invention reste toutefois supérieur ou égal à deux et le noeud comporte au moins une sortie. Il n'est d'ailleurs pas nécessaire que le nombre d'entrées et de sorties soient égaux. Cette modification de connectivité peut être réalisée indépendamment du nombre de modules d'insertion semblables au module 66 ou de récepteurs de paquets 129, dans le commutateur de paquets 30.

L'implémentation physique du noeud selon divers modes de réalisation de l'invention peut être d'une grande diversité, en particulier concernant la nature des composants optiques, la modularité de l'architecture du noeud, en particulier la modularité du module 31 (figure 4), l'utilisation d'un équipement partiel du noeud, le rajout possible d'éléments optionnels, etc.

Concernant les composants optiques, le module d'extraction 127 peut être réalisé de façon monolithique sur un substrat semi-conducteur III-V, par exemple InP, intégrant des récepteurs de paquets 129 sous la forme de photodiodes pin éclairées par la tranche, et un démultiplexeur 128 planaire de type AWG, les photodiodes pin et le démultiplexeur étant reliés par des guides d'ondes optiques GaInAsP/InP également intégrés sur le même substrat InP. Il est également possible d'insérer entre le démultiplexeur planaire AWG et les pin des amplificateurs optiques semi-conducteurs de type GaInAsP/InP pouvant amplifier ou atténuer les signaux optiques propagés sur les guides d'ondes GaInAsP/InP, de manière à améliorer la sensibilité de réception. De même, il est possible de réaliser le transmetteur de canaux de longueurs d'ondes 66 en utilisant des lasers DFB émettant une puissance optique continue, des modulateurs externes, un multiplexeur AWG et un ou plusieurs amplificateurs optiques, tous ces composants étant intégrés monolithiquement sur un même substrat InP en technologie planaire GaInAsP/InP.

Bien d'autres technologies particulières peuvent être mises en oeuvre dans l'architecture optique 31 du noeud de commutation de paquets optiques et dans le module d'extraction, d'insertion et de transfert 66, par exemple utilisant des multiplexeurs planaires en silice sur silicium ou en verre, ou des multiplexeurs utilisant des micromachines optiques (optical MEM's) ou encore des moyens d'amplifications localisées ou réparties des signaux optiques, ainsi qu'une grande variété de moyens de packaging et d'autres moyens. Le modulateur des émetteurs de paquets 80 peut être interne ou externe à un laser générant le canal de longueur d'onde. Bien d'autres variantes de technologies sont encore possibles.

Concernant la modularité, les capacités d'insertion, d'extraction et de transit peuvent être avantageusement modifiées de manière modulaire et indépendamment l'une de l'autre. Par exemple, le coupleur en étoile 46 peut posséder beaucoup plus de sorties que les sorties 50, 53 et 56 représentées sur la figure 4 ; au moment où le noeud de commutation de paquets optiques est installé, le nombre de chemins optiques d'insertion connectés peut être faible : par exemple 3 chemins 52, 55 et 58 comme représentés sur la figure 4, ou moins de chemins ; l'augmentation du trafic au bout de quelque temps peut justifier d'augmenter la capacité d'insertion du noeud en rajoutant des chemins optiques d'insertion supplémentaires ainsi que les portes optique , les coupleurs d'insertion et les modules d'insertion respectifs.

La capacité de transit du noeud peut être supérieure à sa capacité d'extraction. En d'autres termes, il n'est pas toujours nécessaire de prévoir un récepteur de paquets 129 pour tous les canaux de longueurs d'ondes. Il n'est pas toujours nécessaire de prévoir une porte optique 59 sur tous les chemins optiques d'insertion, tel le chemin 52.

Sur la figure 4, chaque chemin optique d'insertion peut posséder d'autres éléments transparents aux canaux de longueurs d'ondes optiques transportant des paquets optiques, et non représentés sur la figure 4, comme un atténuateur optique variable respectif ou un contrôleur de polarisation optique respectif , ou d'autres éléments encore.

D'autres éléments comme des atténuateurs réglables ou des amplificateurs peuvent être insérés entre les émetteurs de paquets optiques et les entrées des multiplexeurs ou coupleurs 1 :n des modules d'insertion 66, 69 et 72, si nécessaire. Le nombre d'émetteurs de paquets dans un module d'insertion peut être différent de quatre et le nombre de détecteur de paquets dans le module de réception peut être différent de 12.

Dans le mode de réalisation présenté (figure 3), les modules 36 et 41 sont identiques au module 31 (figure 2). Dans d'autres modes de réalisation, ces modules pourraient présenter des variantes, en utilisant par exemple des modules d'insertion 66, 69, 72 différents, d'autres différences étant possibles.

Au niveau d'une ou plusieurs entrées 4, 5 et 6 de l'architecture optique 1, il peut être souhaitable de placer des modules amplificateurs de canaux de longueurs d'ondes, montés sur les chemins optiques 7, 8 et 9. Ces modules amplificateurs optionnels n'ont pas été représentés sur les figures 2 et 4, pour ne pas nuire à leur clarté. Ces modules amplificateurs peuvent-être par exemple des amplificateurs de type EDFA pour amplifier le signal optique transporté dans les fibres 7, 8 et 9. Si un module amplificateur possède plusieurs étages, par exemple deux étages, et que la perte optique inter-étage introduite par les éléments optiques traversés depuis une entrée du noeud jusqu'à une sortie du noeud n'est pas excessive, par exemple inférieur à 10dB, un de ces étages peut être placé sur une des entrées 4, 5 et 6 (figure 2) et l'autre étage sur une des sorties 10, 11 et 12.

Il peut être également souhaitable de placer un ou des atténuateurs-égalisateurs de canaux optiques réglable, sur un ou plusieurs des chemins optiques 13, 14 et 15 au niveau de la ou des sorties 10, 11, 12 respectives. Lesdits atténuateurs-égalisateurs réglables permettent de réaliser le réglage et l'égalisation de puissance optique des différents canaux de longueurs d'ondes transmis par les chemins optiques 13, 14 et 15, vers les noeuds en aval du réseau. De préférence, la fonction d'égalisation est intégrée dans les séparateurs et les combineurs. Lesdits atténuateurs-égalisateurs n'ont pas été représentés sur les figures 2 et 4 pour ne pas nuire à leur clarté. Ces modules amplificateurs optiques et atténuateurs-égalisateur optiques peuvent améliorer la cascadabilité du noeud de commutation optique selon un mode de réalisation de l'invention en compensant les pertes occasionnées par les composants optiques, par exemple (figure 4), le coupleur étoile 46, les chemin optiques d'insertion 52, 55 et 58 , les séparateurs 18, 22 et 26, le combineur 30, etc. Le nombre d'étages d'amplification peut être adapté en fonction des besoins existants dans le réseau, ce qui dépend des distances de propagation et de l'ensemble des équipements optiques installés. Par ailleurs, comme les portes optiques 59, 60 et 61 peuvent remplir une fonction d'amplification pour les paquets transférés par le module 31, si il s'agit par exemple d' amplificateurs semi-conducteurs, il n'est pas toujours nécessaire que des modules amplificateurs de canaux optiques, par exemple de type EDFA, soient placés au niveau des entrées 4,5 et 6 ou des sorties 10,11 et 12 (figure 2).

Certains des éléments représentés, notamment le contrôleur 75, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive. De même, les files d'attentes nécessaires au stockage temporaire des données extraites et des données en attente d'insertion peuvent être centralisées dans un module de mémoire ou distribuées dans plusieurs.

L'architecture optique 1 représentée sur les figure 1 et 4, selon le premier mode de réalisation de l'invention, est utilisable dans de nombreux types de réseaux optiques, avec des architectures en anneaux, ou maillées ou toute autre architecture, avec un nombre de noeuds quelconque, et avec des étendues géographiques diverses, notamment LAN, MAN, WAN, ou au coeur d'un routeur optique, et autres réseaux encore.

Dans les modes de réalisation présentés (figure 2), et pour des raisons de clarté, nous avons considéré une seule grille contenant des longueurs d'ondes transportées tout ou partie et de façon évolutive dans le temps par les chemins optiques 7, 8 et 9 en entrée de noeud et les chemins optiques 13, 14 et 15, en sortie du noeud. Le noeud de réseau selon un mode de réalisation de l'invention peut bien sur être adapté, au cas où les chemins optiques 7, 8, 9, 13, 14 et 15 transportent plusieurs grilles de longueurs d'onde, notamment des grilles à des pas différents. Ainsi, certaines fibres peuvent transporter des grilles WDM régulières au pas de 100GHz et d'autres peuvent transporter des grilles WDM régulières au pas de 50GHz. Il n'est d'ailleurs pas nécessaire que l'espacement des canaux de longueurs d'ondes transportés par ces fibres soit un espacement régulier. Il est aussi possible dans certains cas, par exemple, à certains instants, qu'un ou des chemins optiques 7, 8 et 9 et/ou des chemins optiques 13, 14,15 ne transportent qu'une seule longueur d'onde. Par exemple, un noeud selon un mode de réalisation de l'invention est capable de recevoir un seul canal de longueur d'onde SONET autour de 1,3µm sur l'entrée 4 et des canaux WDM autour de 1,55µm portant des paquets optiques, sur les entrées 5 et 6 (figure 2).

Les paquets de données optiques peuvent avoir divers formats, avec une taille fixe ou variable. La figure 5 illustre une transmission synchrone de paquets fixes sur tous les canaux. Les colonnes représentent des fenêtres temporelles successives de même durée. Mais d'autres formats de paquets, de tailles variables et/ou asynchrones peuvent être reçus par un noeud de commutation selon d'autres modes de réalisation possibles de l'invention. Selon les caractéristiques des signaux paquets optiques reçus, les indications de signalisation nécessaires sont fournies au contrôleur 75. Un noeud selon un mode de réalisation de l'invention est donc en particulier capable de reconnaitre des signalisations de circuits optiques, de paquets optiques sur un seul canal et de paquets optiques multi canaux. En particulier, les capacités de commutation de paquets optiques multi canaux du premier mode de réalisation ont été illustrées pour des paquets optiques multicanaux sur quatre canaux, c'est à dire le même nombre de canaux portés par chacun des modules d'insertion 66, 69 et 72 (figure 4). Le contrôleur 75 est également capable de commuter des paquets optiques multi canaux sur un nombre de canaux inférieur ou bien supérieur au nombre de canaux portés par les modules d'insertion 66, 69 et 72. Par exemple, ce nombre de canaux peut évoluer au cours du temps et passer de quatre à trois ou à sept. Si le nombre de canaux portant des paquets optiques multi canaux est supérieur au nombre de canaux que peuvent délivrer chacun des modules 66, 69 et 72, plusieurs de ces modules peuvent être utilisés, par exemple deux modules pour délivrer sept canaux. Dans ce cas, les fibres 133 peuvent être avantageusement utilisées pour synchroniser les fragments émis par plusieurs modules d'insertion. Les caractéristiques de la couche électronique du noeud (figure 6) sont également adaptées en conséquence.

Dans les modes de réalisation de l'invention présentés, on a présenté des canaux de longueurs d'ondes λ_{4c}, λ_{5c}, λ_{6c}, λ_{10c}, λ_{11c}, λ_{12c} qui transportent des informations de signalisation relatives aux paquets optiques et aux circuits optiques. Le nombre et la nature de ces canaux peuvent être très variés : ils peuvent être identiques ou différents , ils peuvent être en partie ou en totalité identiques à des canaux portant des données (signalisation in band). La signalisation pourrait éventuellement être réalisée de manière non optique (par exemple, par radio).

Dans les deux modes de réalisation présentés (figures 4 et 7), les séparateurs sont des démultiplexeurs accordables, de préférence de type WSS et les combineurs sont des multiplexeurs accordables, de préférence de type WSS. Ces modes de réalisation présentent l'avantage d'être compatible avec une modification dans le réseau et au cours du temps de l'allocation des canaux au transport des circuits optiques ou des paquets optiques.

Cette flexibilité n'est pas toutefois toujours nécessaire. Par exemple, le noeud de réseau 1 peut être un élément d'un réseau qui constitue le coeur d'un routeur optique. Dans cette application, comme dans d'autres, l'allocation des canaux de longueurs d'ondes à la commutation de circuits ou des paquets optiques peut être stable dans le temps. Il peut être alors avantageux d'utiliser des démultiplexeurs périodiques pour réaliser les séparateurs et des multiplexeurs périodiques pour réaliser le combineurs. Dans ce cas, les séparateurs et les combineurs peuvent ne pas être accordables , ne nécessitant pas alors un accord par le contrôleur 75 via des liaisons 76 et 77. Par exemple (figure 4), le séparateur 18, si il est constitué d'un séparateur périodique sépare sur sa sortie pour paquets 102 les quatre canaux λ₁ à λ₄. On a alors choisi pour le combineur 30 un multiplexeur périodique compatible, c'est à dire en particulier, laissant passer depuis la porte 51 vers las sortie 10 les quatre canaux λ₁ à λ₄. Ce multiplexeur périodique ne laisse par contre pas passer ces quatre canaux depuis ses entrées 54 et 57 vers la sortie 10. La commutation de paquets optiques multi canaux reste donc possible, en utilisant pour les séparateurs et les combineurs des démultiplexeurs périodiques compatibles.

Le noeud selon d'autres modes de réalisation selon l'invention présente finalement un certains nombre d'autres avantages, de nature accessoire, par exemple la capacité d'auto protection des modules assurant l'extraction, l'insertion ou le transfert des paquets optiques, du fait de la redondance de chemins optiques d'insertion 52,55 et 58 (figure 4).

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs unités ou modules peuvent être représentés par un même élément matériel.

Dans les revendications, tout chiffre de référence entre parenthèses ne saurait être interprété comme une limitation de la revendication.

## Revendications

1. Noeud de commutation de paquets optiques comportant :
une pluralité d'entrées (4,5) pour recevoir des signaux optiques comprenant des paquets de données portés par des canaux de longueurs d'ondes,
une pluralité de séparateurs (18,22) de canaux de longueurs d'ondes, un desdits séparateurs de canaux étant disposé sur chacune des entrées (4,5) et capable de séparer sur des sorties de séparateurs pour paquets (102,109) des signaux optiques comprenant des paquets de données portés par des canaux de longueurs d'ondes,
une sortie (10) pour transmettre des signaux optiques comprenant des paquets de données portés par des canaux de longueurs d'ondes,
un combineur (30) de canaux de longueurs d'ondes, disposé sur ladite sortie (10), ce combineur pouvant laisser passer sur ladite sortie (10) des canaux de longueurs d'ondes reçus sur au moins deux entrées (51,54) du combineur,
ledit combineur (30) étant associé à au moins deux chemins optiques d'insertion (52,55), chacun desdits chemins optiques d'insertion (52,55) étant connecté à une entrée respective (51,54) dudit combineur (30) et pouvant transmettre des signaux optiques comprenant des paquets de données portés par des canaux de longueurs d'ondes,
au moins deux portes optiques (59,60), au moins une desdites portes optiques étant disposée sur chacun desdits au moins deux chemins optiques d'insertion (52,55) , et commutable en mode paquet pour sélectivement bloquer ou faire passer un ou plusieurs paquets de données portés par des canaux de longueurs d'ondes sur lesdits chemins optiques d'insertion (52,55),
au moins deux coupleurs d'insertion de paquets optiques (62,63), chacun étant disposé sur l'un desdits au moins deux chemins optiques d'insertion (52,55), entre l'une desdite portes optiques (59,60) et l'une des entrées (51,54) du combineur (30), et au moins deux modules d'insertion (66,69), chacun relié à l'un desdits coupleurs d'insertion (62,63), pour engendrer sur lesdits au moins deux chemins optiques d'insertion (52,55), un ou plusieurs paquets de données optiques, sur des canaux de longueurs d'ondes,
un module d'extraction de paquets optiques (127) apte à démoduler des paquets optiques de données portés par des canaux de longueurs d'ondes,
et un contrôleur (75) pour contrôler le module d'extraction de paquets (127) , lesdits au moins deux modules d'insertion (66,69) , et lesdites au moins deux portes optiques (59,60), de manière à extraire, à insérer ou à transférer du trafic à l'échelle de un ou plusieurs paquets sur des canaux de longueurs d'ondes,
**caractérisé par le fait qu'**il comporte un coupleur en étoile (46) associé audit combineur (30) de canaux de longueurs d'ondes,
ledit coupleur en étoile comportant des sorties de coupleur en étoile (50,53) connectées à chaque chemin optique d'insertion (52,55) associé au combineur (30),
une autre sortie de coupleur en étoile (132) connectée au module d'extraction de paquets (127),
et plusieurs entrées de coupleur en étoile (102,109) reliées par des chemins optiques d'extraction (102,109) à des sorties pour paquets (102,109) de plusieurs desdits séparateurs (4,5) de canaux de longueur d'onde, chacun desdits séparateurs (4,5) de canaux étant configuré pour séparer vers la ou chacune desdites sorties pour paquets (102,109), un ou plusieurs canaux de longueurs d'onde portant des paquets de données destinés à ladite sortie (10) du noeud sur laquelle est disposé ledit combineur (30) associé audit coupleur en étoile (46).

2. Noeud de commutation de paquets optiques selon la revendication 1, **caractérisé par le fait qu'**au moins un desdits séparateurs (18) de canaux de longueurs d'ondes est capable de
séparer sur au moins une sortie pour paquets (102), au moins un canal de longueur d'onde portant des paquets de données,
et sur au moins une autre sortie, dite sortie pour circuits optiques (106), au moins un canal de longueur d'onde portant un circuit optique,
lesdits paquets de données et ledit circuit optique étant destinés à ladite sortie (10) du noeud de commutation ,
ledit noeud comportant un chemin optique de transfert de circuit (106) reliant une entrée de circuit optique (106) du combineur (30) de canaux de longueurs d'ondes disposé sur ladite sortie (10) de noeud à ladite sortie de circuit optique (106) dudit au moins un séparateur (18) de canaux de longueurs d'ondes,
et que le combineur (30) est capable de laisser passer vers ladite sortie (10) du noeud de commutation des paquets optiques sur un canal de longueur d'onde reçu sur une entrée de paquets (51) depuis un chemin optique d'insertion (52) respectif,
et au moins un circuit optique sur un canal de longueur d'onde reçu sur ladite entrée de circuit optique (106) dudit combineur (30) de canaux de longueurs d'ondes, depuis ledit chemin optique de transfert de circuit (106).

3. Noeud de commutation de paquets optiques selon la revendication 1 ou 2, **caractérisé par le fait qu'**au moins une desdites portes optiques (59) est un amplificateur optique semi-conducteur.

4. Noeud de commutation de paquets optiques selon l'une des revendications 1 à 3, **caractérisé par le fait qu'**au moins un module d'insertion (66) est capable d'engendrer sur une pluralité de canaux de longueurs d'ondes des paquets optiques multi canaux, un paquet optique multi canaux pouvant être inséré sur le chemin optique d'insertion respectif (52).

5. Noeud de commutation de paquets optiques selon l'une des revendications 1 à 4, **caractérisé par le fait qu'**au moins un des séparateurs (18) est un démultiplexeur périodique.

6. Noeud de commutation de paquets optiques selon l'une des revendications 1 à 4, **caractérisé** le fait qu'au moins un des séparateurs (18,22) est un démultiplexeur réglable.

7. Noeud de commutation de paquets optiques selon la revendication 6, **caractérisé par le fait que** ledit au moins un démultiplexeur réglable (18) peut être configuré pour séparer sur une sortie pour paquets (102) au moins un canal de longueur d'onde quand celui ci transporte des paquets optiques et de séparer ledit au moins canal de longueur d'onde sur une sortie pour circuits, quand ledit au moins un canal de longueur d'onde transporte un circuit optique.

8. Noeud de commutation de paquets optiques selon l'une des revendications 1 à 7, **caractérisé par le fait que** au moins un desdits modules d'insertion (66) comporte au moins deux émetteurs de paquets optiques (80), chacun étant capable d'insérer des paquets optiques sur un canal de longueur d'onde différent, et qu'au moins un des séparateurs (18) est capable de séparer sur une même sortie de séparateur pour paquets (102) lesdits deux canaux de longueurs d'ondes différents.

9. Noeud de commutation de paquets optiques selon l'une des revendications 1 à 8, **caractérisé par le fait que** le combineur (30) est un multiplexeur périodique.

10. Noeud de commutation de paquets optiques selon l'une des revendications 1 à 8, **caractérisé par le fait que** le combineur (30) est un multiplexeur réglable.

11. Noeud de commutation de paquets optiques selon l'une des revendications 1 à 10, **caractérisé par le fait qu'**au moins un desdits modules d'insertion comporte un émetteur de paquets (80) accordable en longueur d'onde.

## Claims

1. An optical packet switching node comprising:
a plurality of inputs (4,5) for receiving optical signals comprising data packets carried by wavelength channels,
a plurality of separators (18,22) of wavelength channels, one of said channel separators being disposed on each of the inputs (4,5) and capable of separating, on separator outputs for packets (102,109), optical signals comprising data packets carried by wavelength channels,
an output (10) for transmitting optical signals comprising data packets carried by wavelength channels,
a combiner (30) of wavelength channels, disposed on said output (10), which combiner may allow through on said output (10) wavelength channels received on at least two inputs (51,54) of the combiner,
said combiner (30) being associated with at least two optical insertion paths (52,55), each of said optical insertion paths (52,55) being connected to a respective input (51,54) of said combiner (30) and able to transmit optical signals comprising data packets carried by wavelength channels,
at least two optical gates (59,60), at least one of said optical gates being disposed on each of said at least two optical insertion paths (52,55), and switchable to packet mode in order to selectively block or allow through one or more data packets carried by wavelength channels on said optical insertion paths (52,55),
at least two optical insertion paths (62,63), each being disposed on one of said at least two optical insertion paths (52,55), between one of said optical paths (59,60) and one of the inputs (51,54) of the combiner (30), and at least two insertion modules (66,69), each connected to one of said insertion couplers (62,63), in order to generate, on said at least two optical insertion paths (52,55), one or more optical data packets on wavelength channels,
an optical packet extraction module (127) capable of demodulating optical data packets carried by wavelength channels,
and a controller (75) for controlling the packet extraction module (127), said at least two insertion modules (66,69), and said at least two optical gates (59,60), in such a way as to extract, insert, or transfer traffic on the scale of one or more packets on wavelength channels,
**characterized by** the fact that it comprises a star coupler (46) associated with said wavelength channel combiner (30),
said star coupler comprising star coupler outputs (50, 53) connected to each optical insertion path (52, 55) associated with the combiner (30),
another star coupler output (132) connected to the packet extraction module (127),
and multiple star coupler inputs (102,109) connected by optical extraction paths (102,109) to outputs for packets (102,109) of a plurality of said wavelength channel separators (4,5) each of said channel separators (4,5) being configured to separate out to the or each of said outputs for packets (102,109), one or more wavelength channels carrying data packets intended for said output (10) of the node on which is disposed said combiner (30) associated with said star coupler (46).

2. An optical packet switching node according to claim 1, **characterized by** the fact that at least one of said wavelength channel separators (18) is capable of
separating out, on at least one output for packets (102), at least one wavelength channel carrying data packets,
and on at least one output, known as an output for optical circuits (106), at least one wavelength channel carrying an optical circuit,
said data packets and said optical circuit being intended for said output (10) of the switching node,
said node comprising an optical circuit transfer path (106) connecting an optical circuit input (106) of the wavelength channel combiner (30) disposed on said node output (10), to said optical circuit output (106) of said at least one wavelength channel separator (18),
and that the combiner (30) is capable of allowing through to said output (10) of the switching node, optical packets on a wavelength channel received at one packet input (51) from a respective optical insertion path (52), as well as at least one optical circuit on a wavelength channel received on said optical circuit input (106) of said wavelength channel combiner (30), coming from said optical circuit transfer path (106).

3. An optical packet switching node according to claim 1 or 2, **characterized by** the fact that at least one of said optical gates (59) is a semiconductor optical amplifier.

4. An optical packet switching node according to one of the claims 1 to 3, **characterized by** the fact that at least one insertion module (66) is capable of generating, on a plurality of wavelength channels of multichannel optical packets, a multichannel optical packet that may be inserted into the respective optical insertion path (52).

5. An optical packet switching node according to one of the claims 1 to 4, **characterized by** the fact that at least one of the separators (18) is a periodic demultiplexer.

6. An optical packet switching node according to one of the claims 1 to 4, **characterized by** the fact that at least one of the separators (18,22) is an adjustable demultiplexer.

7. An optical packet switching node according to claim 6, **characterized by** the fact that said at least one adjustable demultiplexer (18) may be configured to separate on an output for packets (102) at least one wavelength channel which this channel is transporting optical packets, and to separate said at least one wavelength channel on an output for circuits, when said at least one wavelength channel is transporting an optical circuit.

8. An optical packet switching node according to one of the claims 1 to 7, **characterized by** the fact that at least one of said insertion modules (66) comprises at least two optical packet emitters (80), each one being capable of inserting optical packets on a different wavelength channel, and that at least one of the separators (18) is capable of separating said two different wavelength channels on a single output separator for packets (102).

9. An optical packet switching node according to one of the claims 1 to 8, **characterized by** the fact that the combiner (30) is a periodic multiplexer.

10. An optical packet switching node according to one of the claims 1 to 8, **characterized by** the fact that the combiner (30) is an adjustable multiplexer.

11. An optical packet switching node according to one of the claims 1 to 10, **characterized by** the fact that at least one of said insertion modules comprises a wavelength-tunable packet emitter (80).

## Patentansprüche

1. Vermittlungsknoten für optische Pakete, umfassend:
Eine Mehrzahl von Eingängen (4, 5) für den Empfang von optischen Signalen mit von Wellenlängenkanälen transportierten Datenpaketen,
eine Mehrzahl von Wellenlängenkanalteilern (18, 22), wobei einer der Kanalteiler auf einem jeden der Eingänge (4, 5) angeordnet und dazu ausgelegt ist, auf den Teilerausgängen für Pakete (102, 109) optische Signale mit von Wellenlängenkanälen transportierten Datenpaketen zu teilen,
einen Ausgang (10) für die Übertragung der optischen Signale mit von Wellenlängenkanälen transportierten Datenpaketen,
einen Wellenlängenkanalkombinator (30), welcher auf dem besagten Ausgang (10) angeordnet ist, wobei dieser Kombinator auf mindestens zwei Eingängen (51, 54) des Kombinators empfangene Wellenlängenkanäle auf dem besagten Ausgang durchlassen kann,
wobei der besagte Kombinator (30) mit mindestens zwei optischen ADD-Pfaden (52, 55) assoziiert ist, wobei ein jeder der besagten optischen ADD-Pfade (52, 55) mit einem jeweiligen Eingang (51, 54) des besagten Kombinators (30) verbunden ist und optische Signale einschließlich der von Wellenlängenkanälen transportierten Datenpakete übertragen kann,
mindestens zwei optische Ports (59, 60), wobei mindestens einer der besagten optischen Ports auf einem jeden der besagten mindestens zwei optischen ADD-Pfade (52, 55) angeordnet und in den Paketmodus geschaltet werden kann, um ein oder mehrere von Wellenlängenkanälen auf den besagten optischen ADD-Pfaden (52, 55) transportierte Datenpakete selektiv zu blockieren oder durchzulassen,
mindestens zwei ADD-Koppler (62, 63) für optische Pakete, wobei ein jeder auf einem der besagten mindestens zwei optischen ADD-Pfade (52, 55) zwischen einem der besagten optischen Ports (59, 60) und einem der Eingänge (51, 54) des Kombinators (30) angeordnet ist, und mindestens zwei ADD-Module (66,69), von denen ein jedes mit einem der besagten ADD-Koppler (62,63) verbunden ist, um auf den besagten mindestens zwei optischen ADD-Pfaden (52, 55) ein oder mehrere optische Datenpakete auf Wellenkanälen zu erzeugen,
ein DROP-Modul (127) für optische Pakete, welches fähig ist, von Wellenlängenkanälen transportierte optische Datenpakete zu demodulieren,
und eine Steuerung (75) zum Steuern des DROP-Moduls (127) für Pakete, der besagten mindestens zwei ADD-Module (66, 69) und der besagten mindestens zwei optischen Ports (59, 60), um Verkehr im Maßstab von einem oder mehreren Paketen auf Wellenlängenkanälen zu extrahieren, einzufügen oder zu übertragen,
**dadurch gekennzeichnet, dass** er einen mit dem besagten Wellenlängenkanalkombinator (30) assoziierten Sternkoppler (46) umfasst,
wobei der besagte Sternkoppler Sternkoppler-Ausgänge (50, 53) umfasst, welche an jeden mit dem Kombinator assoziierten optischen ADD-Pfad (52, 55) angeschlossen sind,
wobei ein weiterer Ausgang des Sternkopplers (132) an das DROP-Modul (127) für Pakete angeschlossen ist,
und mehrere Sternkoppler-Ausgänge (102, 109), welche über optische DROP-Pfade (102,109) an Paketausgänge (102, 109) mehrerer der besagten Wellenlängenkanalteiler (4, 5) angeschlossen sind, wobei ein jeder der besagten Kanalteiler (4, 5) dafür konfiguriert ist, einen oder mehrere Wellenlängenkanäle, welche für den besagten Ausgang (10) des Knotens, auf welchem der besagte mit dem besagten Sternkoppler (46) assoziierte Kombinator (30) angeordnet ist, bestimmte Datenpakete transportiert, für den oder einen jeden der besagten Paketausgänge (102, 109) zu teilen.

2. Vermittlungsknoten für optische Pakete nach Anspruch 1, **dadurch gekennzeichnet, dass** mindestens einer der besagten Wellenlängenkanalteiler (18) fähig ist,
auf mindestens einem Paketausgang (102) mindestens einen Wellenlängenkanal, welcher Datenpakete transportiert, zu teilen,
und auf mindestens einem anderen Ausgang, dem sogenannten Ausgang für optische Schaltkreise (106), mindestens einen Wellenlängenkanal, welcher einen optischen Schaltkreis trägt, zu teilen,
wobei die besagten Datenpakete und der besagte optischer Schaltkreis für den besagten Ausgang (10) des Vermittlungsknotens bestimmt sind,
wobei der besagte Knoten einen optischen Schaltkreisübertragungspfad (106), welcher einen Eingang des optischen Schaltkreises (106) des auf dem besagten Ausgang (10) angeordneten Wellenlängenkanalkombinators (30) mit dem besagten Ausgang des optischen Schaltkreises (106) des besagten mindestens einen Wellenlängenkanalteilers (18) verbindet, aufweist,
und wobei der Kombinator (30) fähig ist, optische Pakete auf einem an einem Paketeingang (51) von einem jeweiligen optischen ADD-Pfad (52) empfangenen Wellenlängenkanal und mindestens einen optischen Schaltkreis auf einem an dem besagten Eingang des optischen Schaltkreises (106) des besagten Wellenlängenkanalkombinators (30) von dem besagten optischen Pfad für die Übertragung des optischen Schaltkreises (106) empfangenen Wellenlängenkanal zu dem besagten Ausgang (10) des Vermittlungsknotens durchzulassen.

3. Vermittlungsknoten für optische Pakete nach Anspruch 1 oder 2, **dadurch gekennzeichnet, dass** mindestens einer der besagten optischen Ports (59) ein halbleitender optischer Verstärker ist.

4. Vermittlungsknoten für optische Pakete nach einem der Ansprüche 1 bis 3, **dadurch gekennzeichnet, dass** mindestens ein ADD-Modul (66) fähig ist, auf einer Mehrzahl von Wellenlängenkanälen optische Mehrkanal-Pakete zu erzeugen, wobei ein optisches Mehrkanal-Paket in den jeweiligen optischen ADD-Pfad (52) eingefügt werden kann.

5. Vermittlungsknoten für optische Pakete nach einem der Ansprüche 1 bis 4, **dadurch gekennzeichnet, dass** mindestens einer der Teiler (18) ein periodischer Demultiplexer ist.

6. Vermittlungsknoten für optische Pakete nach einem der Ansprüche 1 bis 4, **dadurch gekennzeichnet, dass** mindestens einer der Teiler (18, 22) ein regulierbarer Demultiplexer ist.

7. Vermittlungsknoten für optische Pakete nach Anspruch 6, **dadurch gekennzeichnet, dass** der besagte mindestens eine regulierbare Demultiplexer (18) dafür konfiguriert werden kann, auf einem Paketausgang (102) mindestens einen Wellenlängenkanal zu trennen, wenn dieser optische Pakete transportiert, und den besagten mindestens einen Wellenlängenkanal auf einem Ausgang für optische Schaltkreise zu trennen, wenn der besagte mindestens eine Wellenlängenkanal einen optischen Schaltkreis transportiert.

8. Vermittlungsknoten für optische Pakete nach einem der Ansprüche 1 bis 7, **dadurch gekennzeichnet, dass** mindestens eines der besagten ADD-Module (66) mindestens zwei optische Paketsender (80) aufweist, von denen ein jeder fähig ist, optische Pakete auf einem verschiedenen Wellenlängenkanal einzufügen, und dass mindestens einer der Teiler (18) fähig ist, die besagten zwei verschiedenen Wellenlängenkanäle auf einem selben Ausgang des Teilers für Pakete (102) zu teilen.

9. Vermittlungsknoten für optische Pakete nach einem der Ansprüche 1 bis 8, **dadurch gekennzeichnet, dass** der Kombinator (30) ein periodischer Multiplexer ist.

10. Vermittlungsknoten für optische Pakete nach einem der Ansprüche 1 bis 8, **dadurch gekennzeichnet, dass** der Kombinator (30) ein regulierbarer Multiplexer ist.

11. Vermittlungsknoten für optische Pakete nach einem der Ansprüche 1 bis 10, **dadurch gekennzeichnet, dass** mindestens eines der ADD-Module einen wellenlängenabstimmbaren Paketsender (80) aufweist.
